# EUROPEAN PATENT SPECIFICATION

(11) **EP 2 688 132 B1**
(45) Date of publication and mention of the grant of the patent: **19.08.2015**
(21) Application number: 12758076.9
(22) Date of filing: 08.03.2012
(51) Int. Cl.: H01M 8/04, H01M 8/10

(54) **FUEL CELL SYSTEM AND METHOD FOR OPERATING SAME**
BRENNSTOFFZELLENSYSTEM UND BETRIEBSVERFAHREN DAFÜR
SYSTÈME DE PILE À COMBUSTIBLE ET SON PROCÉDÉ DE FONCTIONNEMENT

(30) Priority: 14.03.2011 JP 2011055841
(43) Date of publication of application: 22.01.2014
(73) Proprietor: Panasonic Corporation, Osaka 571-8501 (JP)
(72) Inventor: YASUDA, Shigeki, Osaka 540-6207 (JP); NAKAMURA, Akinari, Osaka 540-6207 (JP); KUSUMURA, Koichi, Osaka 540-6207 (JP); URATA, Takayuki, Osaka 540-6207 (JP)
(74) Representative: Grünecker Patent- und Rechtsanwälte PartG mbB
(86) International application number: PCT/JP2012/001601
(87) International publication number: WO 2012/124298

(56) References cited:
- WO-A1-2004/012292
- JP-A- 2002 270 194
- JP-A- 2009 064 753
- JP-A- 2009 076 221
- JP-A- 2010 009 752

## Description

### TECHNICAL FIELD

The present invention relates to a fuel cell system including a fuel cell that performs electric power generation using a hydrogen-rich fuel gas and an oxidizing gas, and to a method of operating the same.

### BACKGROUND ART

A fuel cell system is a system that generates electric power and heat by an electrochemical reaction between a fuel gas (hydrogen-containing gas) and an oxidizing gas (for example, air) that are supplied to a fuel cell. In a common home fuel cell system, the generated electric power is supplied to a part of power load used in the home (for example, electrical appliances such as lighting and air conditioning apparatus). On the other hand, the heat produced by the electric power generation is recovered by the cooling water supplied to an interior of the fuel cell. This recovered heat is collected in the form of hot water by, for example, a heat exchanger and supplied to heat load in the home (for example, to the equipment that utilizes heat, such as a water heater and a floor heating apparatus).

The infrastructure for the hydrogen-containing gas, which is necessary in the power generation operation of the fuel cell system, has not been widely established yet. For this reason, the fuel cell system is usually provided with a reformer for generating the hydrogen-containing gas. The reformer generates the hydrogen-containing gas by causing a raw material gas (such as city gas (natural gas)) and water to undergo a steam reforming reaction in a reforming catalyst.

In many cases, such a fuel cell system makes use of the water recovered inside of the system as a water supply source of the water supplied to the reformer and the cooling water, in other words, employs a method of supplying the water in a self-sustainable manner. An example of the method of recovering water inside of the fuel cell system is a method of condensing and recovering water by cooling the steam contained in the fuel gas and the oxidizing gas that are discharged from the fuel cell.

However, because the water recovered in the fuel cell system (hereinafter referred to as the "recovered water") does not contain bactericidal components such as a chlorine component, it is in a condition suited for propagation of microorganisms such as fungi and bacteria. Consequently, the microorganisms such as fungi may enter the system from, for example, the gas outlet port for discharging the oxidizing gas after recovering the water and the water outlet port for discharging surplus recovered water, causing the risk of propagation of the microorganisms such as fungi. The propagation of the microorganisms may lead to clogging, narrowing or the like of the passage through which the recovered water flows. This may impair a water supply function and a water purification function.

In order to solve such a problem, in a known fuel cell power generation apparatus, the temperature of the cooling water is detected, and if it is determined that the temperature of the cooling water has become equal to or below a predetermined temperature and a predetermined time has elapsed thereafter, the temperature of the cooling water is increased to a predetermined temperature or higher (for example, see Patent Literature 1). In another known fuel cell power generation system, a temperature adjusting means is controlled so that, if a first predetermined time period has elapsed while the temperature of the water supplied to a water purifier apparatus is at a temperature less than a bacteria propagation limit temperature, the temperature of the water supplied to the water purifier apparatus is kept in the range of from a predetermined temperature to a deterioration temperature of ion-exchange resin for a second predetermined time period (for example, see Patent Literature 2).

### CITATION LIST

### Patent Literature

Patent Literature 1: Japanese Unexamined Patent Publication No. 2002-270211
Patent Literature 2: Japanese Unexamined Patent Publication No. 2004-103394

### SUMMARY OF INVENTION

### TECHNICAL PROBLEM

However, in the conventional fuel cell power generation systems, when the fuel cell power generation system undergoes a power failure because of wire disconnection in the power supply utility or the like, the temperature detector does not work. Consequently, the temperature increasing process for increasing the temperature of the water is not executed, and bacteria may propagate until the power failure is recovered. Moreover, even after the power failure is recovered, the temperature increasing process is not executed until a predetermined time elapses, so that bacteria may propagate during that time. Furthermore, in such a case where the fuel cell power generation system is stopped over a long period of time while the water is allowed to remain inside of the fuel cell system as well, there is a risk of bacteria propagation because electric power is not supplied to the fuel cell power generation system.

Accordingly, the conventional fuel cell power generation systems still need improvements in the viewpoint of suppressing the propagation of microorganisms such as bacteria.

The present invention has been made to solve the foregoing problems, and it is an object of the invention to provide a fuel cell system that can more effectively suppress propagation of the microorganisms than the conventional fuel cell systems, by performing heat sterilization of microorganisms when electric power is supplied to the fuel cell system in a state in which the electric power is not supplied to the fuel cell system.

### SOLUTION TO PROBLEM

In order to solve the foregoing problems, the present invention provides a fuel cell system including a fuel cell as defined in claim 1.

In this configuration, heat sterilization can be executed on the microorganisms such as fungi contained in the recovered water and the like, and propagation of the microorganisms can be more effectively suppressed than the conventional fuel cell systems.

### ADVANTAGEOUS EFFECTS OF INVENTION

The fuel cell system and the method of operating the same according to the present invention can more effectively suppress propagation of microorganisms than the conventional fuel cell systems, by performing heat sterilization of microorganisms when electric power is supplied to the fuel cell system in a state in which the electric power is not supplied to the fuel cell system.

### BRIEF DESCRIPTION OF DRAWINGS

[Fig. 1] Fig. 1 is a block diagram schematically illustrating the overall construction of a fuel cell system according to Embodiment 1 of the present invention.
[Fig. 2] Fig. 2 is a block diagram schematically illustrating electrical connections in the fuel cell system shown in Fig. 1.
[Fig. 3] Fig. 3 is a flowchart schematically illustrating a temperature increasing operation in a fuel cell system according to Embodiment 2 of the present invention.
[Fig. 4] Fig. 4 is a flowchart illustrating specific operations of the temperature increasing process shown in Fig. 3.
[Fig. 5] Fig. 5 is a flowchart schematically illustrating a temperature increasing operation in a fuel cell system of the present modified example 1.
[Fig. 6] Fig. 6 is a block diagram schematically illustrating the overall construction of a fuel cell system according to Embodiment 3 of the present invention.
[Fig. 7] Fig. 7 is a flowchart schematically illustrating the temperature increasing operation in the fuel cell system according to Embodiment 3 of the present invention.
[Fig. 8] Fig. 8 is a block diagram schematically illustrating the overall construction of a fuel cell system of the present modified example 1.
[Fig. 9] Fig. 9 is a flowchart schematically illustrating the temperature increasing operation in the fuel cell system of the present modified example 1.
[Fig. 10] Fig. 10 is a flowchart schematically illustrating a temperature increasing operation in a fuel cell system of the present modified example 2.
[Fig. 11] Fig. 11 is a block diagram schematically illustrating the overall construction of a fuel cell system according to Embodiment 4 of the present invention.
[Fig. 12] Fig. 12 is a flowchart schematically illustrating the temperature increasing operation in the fuel cell system according to Embodiment 4 of the present invention.

### DESCRIPTION OF EMBODIMENTS

A fuel cell system according to an embodiment of the present invention is a fuel cell system including a fuel cell as defined in claim 1.

In the present invention, the phrase "the state in which the electric power is not supplied (from a power supply utility to a fuel cell system)" refers to a state in which the supply of electric power from the power supply utility to the fuel cell system is stopped. Examples of the cases in which the supply of electric power from the power supply utility to the fuel cell system is stopped include a case where a wire for supplying electric power to the fuel cell system is disconnected, a case where a circuit breaker is tripped, and a case where the power plug of the fuel cell system is removed. The state in which the electric power is not supplied to the fuel cell system also includes such a case where the fuel cell system is stopped over a long period of time in a state in which water is allowed to remain in the fuel cell system.

Moreover, in the present invention, the term "germs" is meant to include bacteria, such as Escherichia coli and Bacillus subtilis, and fungi, such as mold. In addition, in the present invention, the term "predetermined temperature" means a temperature at which germs existing in the water in one of the cooling water passage, the cooling water tank, the recovered water tank, and the water circulating passage can be killed (i.e., a temperature at which propagation of the germs can be suppressed), which can be set appropriately depending on the types of germs that are the target of propagation suppression.

With the above-described configuration, propagation of microorganisms can be suppressed more effectively than the conventional fuel cell systems, by performing heat sterilization of microorganisms when electric power is supplied to the fuel cell system in a state in which the electric power is not supplied to the fuel cell system.

Hereinbelow, preferred embodiments of the present invention are described in detail. In all the drawings, same or corresponding components are designated by same reference characters, and repetitive descriptions will be avoided. In addition, in all the drawings, only the selected constituent elements necessary for describing the present invention are shown, and the rest of the constituent elements are not shown in some cases. Furthermore, the present invention is not limited to the following embodiments.

### (Embodiment 1)

### [Configuration of Fuel Cell System]

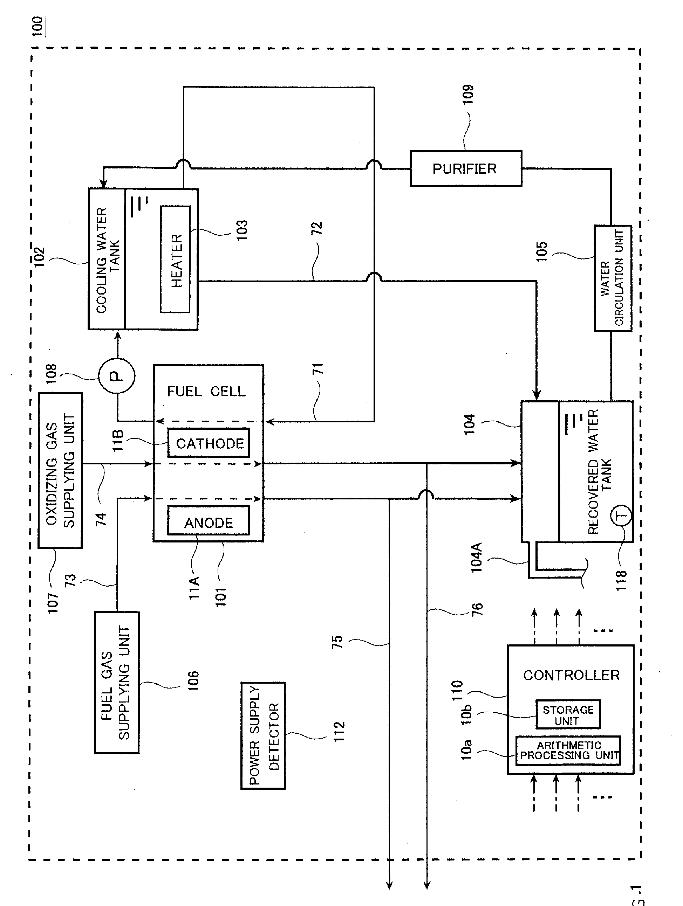

Fig. 1 is a block diagram schematically illustrating the overall construction of a fuel cell system according to Embodiment 1 of the present invention.

As illustrated in Fig. 1, a fuel cell system 100 according to Embodiment 1 includes a fuel cell 101, a cooling water passage 71, a cooling water tank 102, a heater 103, a recovered water tank 104, a water circulating passage 72, a water circulation unit 105, a power supply detector 112, a temperature detector 118, and a controller 110. The controller 110 is configured to execute a temperature increasing process for increasing the temperature detected by the temperature detector 118 to a predetermined temperature or higher if a power supply detection unit detects a change from a state in which the electric power is not supplied to a state in which the electric power is supplied.

In Embodiment 1, a power failure of the fuel cell system 100 and a recovery from the power failure are shown as examples of the change from the state in which the electric power is not supplied to the state in which the electric power is supplied. The temperature increasing process may be executed by activating the water circulation unit 105, or may be executed by activating the heater 103 and the water circulation unit 105.

The fuel cell 101 includes an anode 11A and a cathode 11B. A fuel gas is supplied to the anode 11A from a fuel gas supplying unit 106 via a fuel gas supply passage 73. An oxidizing gas is supplied to the cathode 11 B from an oxidizing gas supplying unit 107 via an oxidizing gas supply passage 74. As the fuel cell 101, it is possible to use various fuel cells, such as polymer electrolyte fuel cells and phosphoric acid fuel cells. The configuration of the fuel cell 101 is the same as that of a common fuel cell, so the detailed description will not be made.

The fuel gas supplying unit 106 may be of any type as long as it is configured to supply a fuel gas to the anode 11A of the fuel cell 101. For example, the fuel gas supplying unit 106 may include a tank for storing the fuel gas and a pump for sending out the fuel gas from the tank, or may include a hydrogen generator that generates the fuel gas through a reforming reaction using a raw material and water. The oxidizing gas supplying unit 107 may also be of any type as long as it is configured to supply an oxidizing gas to the cathode 11B of the fuel cell 101. For example, a fan such as a blower and a sirocco fan can be used for the oxidizing gas supplying unit 107. The fuel gas supplying unit 106 and the oxidizing gas supplying unit 107 may include a humidifier for humidifying the gas to be supplied by them.

In the fuel cell 101, the fuel gas supplied to the anode 11A and the oxidizing gas supplied to the cathode 11B electrochemically react with each other, so that water is produced and at the same time electricity and heat are generated. As will be described later, the generated heat is recovered by the cooling water flowing through the cooling water passage 71, and thereby the fuel cell 101 is cooled. In addition, a portion of the generated water vaporizes and humidifies the reaction gas. Then, the steam that has humidified the reaction gas and the generated water, along with unused reaction gas, are discharged to outside of the fuel cell 101.

Specifically, the fuel gas unused in the fuel cell 101 (i.e., off-fuel-gas), steam, and the produced water are discharged to outside of the fuel cell system 100 through an off-fuel-gas passage 75. The oxidizing gas unused in the fuel cell 101 (i.e., off-oxidizing-gas), steam, and a portion of the produced water are discharged to outside of the fuel cell system 100 through an off-oxidizing-gas passage 76.

The steam that has humidified the fuel gas is condensed into water during the time for which the steam flows through the off-fuel-gas passage 75. The water condensed in the off-fuel-gas passage 75 and the water discharged into the off-fuel-gas passage 75 are stored in the recovered water tank 104 as recovered water. Likewise, the steam that has humidified the oxidizing gas is condensed into water during the time for which the steam flows through the off-oxidizing-gas passage 76. The water condensed in the off-oxidizing-gas passage 76 and the water discharged into the off-oxidizing-gas passage 76 are stored in the recovered water tank 104 as recovered water. A surplus portion of the recovered water stored in the recovered water tank 104 is discharged to outside of the fuel cell system 100 through a water discharge passage 104A.

Although the fuel cell system 100 according to Embodiment 1 employs the embodiment in which water is recovered from both the off-fuel-gas passage 75 and the off-oxidizing-gas passage 76, the present invention is not limited to this. The fuel cell system 100 may employ any configuration as long as water is recovered from at least one of the off-fuel-gas passage 75 and the off-oxidizing-gas passage 76. In addition, it may employ a configuration in which a condenser for promoting the condensation of the steam is provided for at least one of the off-fuel-gas passage 75 and the off-oxidizing-gas passage 76. As the condenser, it is possible to use a heat exchanger, for example.

In addition, the fuel cell 101 is provided with the cooling water passage 71 through which cooling water for cooling the fuel cell 101 flows. The cooling water tank 102, the heater 103, and a fluid sending unit 108 are provided at an intermediate portion of the cooling water passage 71. The heater 103 may be of any type as long as it is configured to increase the temperature of the cooling water within the cooling water passage 71. For example, an electric heater may be used. When an electric heater is used as the heater 103, the electric heater may be configured to consume surplus electric power generated by the fuel cell 101 (the fuel cell system 100). Furthermore, the fluid sending unit 108 may be of any type as long as it can send out the water in the cooling water passage 71. For example, a pump may be used.

In Embodiment 1, the heater 103 is disposed inside of the cooling water tank 102. The reason for this is that the cooling water tank 102 can be regarded as part of the cooling water passage 71, because the cooling water tank 102 is configured to store the cooling water flowing through the cooling water passage 71 and to supply the stored cooling water to the cooling water passage 71. For this reason, as long as the heater 103 can increase the temperature of the cooling water in the cooling water passage 71, the heater 103 may be disposed either inside of the cooling water passage 71 (including the cooling water tank 102) or outside of the cooling water passage 71 (including the cooling water tank 102). Moreover, the heater 103 may be disposed inside of the water circulating passage 72 or inside of the recovered water tank 104.

The recovered water tank 104 is connected to the cooling water tank 102 via the water circulating passage 72. The temperature detector 118 is provided inside of the recovered water tank 104. The temperature detector 118 may be of any type as long as it can detect the temperature of the water inside of the recovered water tank 104. Although Embodiment 1 employs the configuration in which the temperature detector 118 is provided inside of the recovered water tank 104, the present invention is not limited to this. The temperature detector 118 may be provided in at least one of the cooling water tank 102, the cooling water passage 71, the recovered water tank 104, and the water circulating passage 72.

The water circulating passage 72 is provided with the water circulation unit 105. The water circulation unit 105 is configured to circulate water between the recovered water tank 104 and the cooling water tank 102. As the water circulation unit 105, for example, it is possible to use a pump, or an on/off valve that permits/inhibits the communication of the pump and the water in the water circulating passage 72.

In addition, a purifier 109 is provided in a passage from the recovered water tank 104 to the cooling water tank 102 in the water circulating passage 72. The purifier 109 may be of any type as long as it can purify water. In Embodiment 1, the purifier 109 comprises a casing in which an ion-exchange resin is filled, and purifies water by causing the impurities contained in water (mainly ions) to be adsorbed by the ion-exchange resin. The purifier 109 may comprises a casing provided with an activated carbon filter or a reverse osmosis membrane.

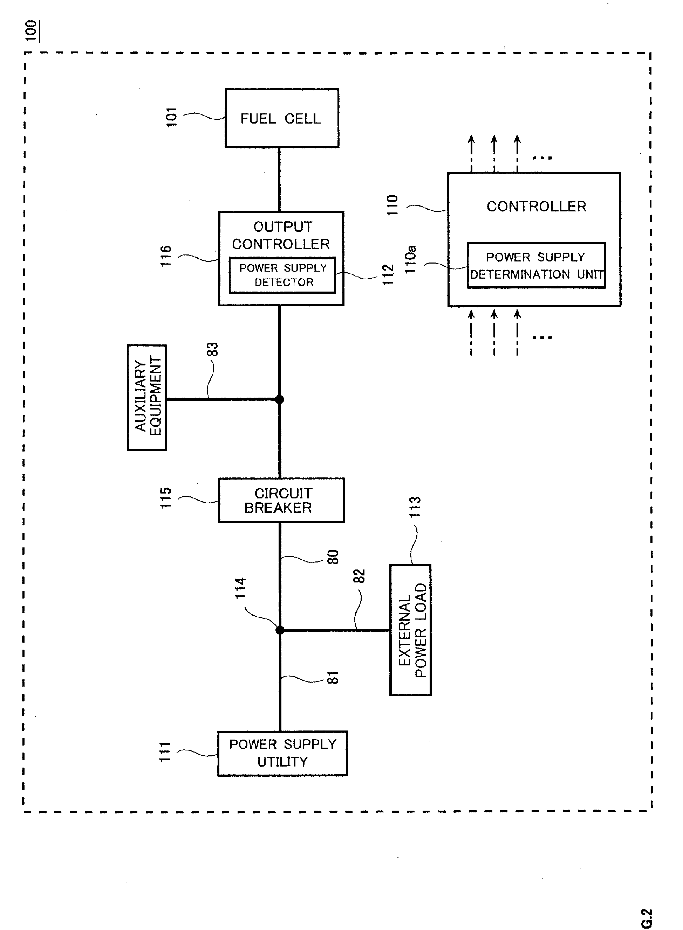

Here, electrical connections in the fuel cell system 100 according to Embodiment 1 will be described referring to Fig. 2. Note that in Fig. 2, the cooling water tank 102 and so forth are omitted.

Fig. 2 is a block diagram schematically illustrating electrical connections in the fuel cell system shown in Fig. 1.

The fuel cell 101 is connected to an interconnecting point 114 via a wire 80. The interconnecting point 114 is also connected to a power supply utility 111 via a wire 81. Furthermore, the interconnecting point 114 is connected to an external power load 113 via a wire 82.

The wire 80 is connected to auxiliary equipment (internal power load) via a wire 83. The auxiliary equipment is the devices that use electric power among various devices that make up the fuel cell system 100. Examples of auxiliary equipment include the controller 110, the oxidizing gas supplying unit 107, the water circulation unit 105, and the fluid sending unit 108. Examples of the external power load 113 include electrical appliances used in home.

A circuit breaker 115 is provided on a portion of the wire 80 that is closer to the interconnecting point 114 than a point at which the wire 83 is connected to the wire 80. The circuit breaker 115 is configured to cut off the electrical connection between the power supply utility 111 and the fuel cell system 100. In addition, an output controller 116 is provided on a portion of of the wire 80 that is closer to the fuel cell 101 than a point at which the wire 83 is connected to the wire 80. The output controller 116 has, for example, at least one device of a DC/DC converter and a DC/AC inverter, and is configured to supply electric power generated by the fuel cell 101 to the external power load 113 and the auxiliary equipment.

The output controller 116 includes the power supply detector 112. The power supply detector 112 has a function of detecting ac voltage of the power supply utility 111 and a function of applying a phase shift (phase variation) to the output current from the inverter and detecting a change of a phase of a voltage waveform. The power supply detector 112 is configured to output the detected voltage value and the phase of the voltage waveform to a power supply determination unit 110a of the controller 110. Based on the voltage value and the phase of the voltage waveform that are input from the power supply detector 112, the power supply determination unit 110a determines whether or not a power failure of the fuel cell system 100 has occurred. In addition, based on the voltage value, it determines whether or not the power failure of the fuel cell system 100 has recovered. Note that the power supply detector 112 and the power supply determination unit 110a constitute a power supply detection unit.

Specifically, for example, when the electric power supply from the power supply utility 111 to the fuel cell system 100 is stopped (i.e., a power failure of the fuel cell system 100 occurs) due to a lighting strike or the like during the time for which the electric power generation in the fuel cell system 100 is stopped, the voltage value detected by the power supply detector 112 drops. Accordingly, the power supply determination unit 110a can determine that a power failure of the fuel cell system 100 has occurred if the voltage value detected by the power supply detector 112 is equal to or lower than a threshold value V1. Note that the predetermined threshold value V1 may be set appropriately.

On the other hand, when the electric power supply from the power supply utility 111 to the fuel cell system 100 is stopped during the time for which the fuel cell system 101 is performing the electric power generation operation, the voltage value detected by the power supply detector 112 does not change because the fuel cell 101 is generating electric power. This means that the power supply determination unit 110a cannot detect the power failure of the power supply utility 111 based on the voltage value. For this reason, the power supply detector 112 applies a phase shift to the output current from the output controller 116, detects the phase of the voltage waveform at that time, and outputs the detected phase of the voltage waveform to the power supply determination unit 110a. When electric power is supplied from the power supply utility 111, the phase of the voltage waveform does not change even when a phase shift is applied to the output current, whereas when the power supply from the power supply utility 111 is stopped, the phase of the voltage waveform changes according to the phase shift. Accordingly, based on this change of the phase, the power supply determination unit 110a can determine that a power failure of the fuel cell system 100 has occurred.

In addition, when a power failure of the fuel cell system 100 occurred and thereafter the power failure is recovered, a voltage is applied to the wire 80 because electric power is supplied from the power supply utility 111 to the fuel cell system 100 (to the auxiliary equipment of the fuel cell system 100). Accordingly, the power supply determination unit 110a can determine that a power failure of the fuel cell system 100 has been recovered if the voltage value detected by the power supply detector 112 is a threshold value V2 or higher. Note that the predetermined threshold value V2 may be set appropriately.

The controller 110 includes the power supply determination unit 110a. The controller 110 may be of any type as long as it is a device that controls various devices that constitute the fuel cell system 100. For example, the controller 110 may include an arithmetic processing unit 10a, which is exemplified by a microprocessor, a CPU or the like, and a storage unit 10b, which is composed of a memory or the like, that stores a program for executing various control operations (see Fig. 1). The arithmetic processing unit executes the program stored in the storage unit, thereby implementing the power supply determination unit 110a.

It should be noted that the controller 110 may not be a type that is formed of a single controller but may also be a type that is formed of a controller assembly in which a plurality of controllers cooperate together to execute controlling of the fuel cell system 100. For example, the controller 110 may be configured to control the heater 103 and the water circulation unit 105, and another controller may perform controlling of the other devices that constitute the fuel cell system 100. In addition, the controller 110 may be composed of a microcontroller, or may be composed of a MPU, a PLC (Programmable Logic Controller), a logic circuit, or the like.

### [Operation of Fuel Cell System]

Next, the operation of the fuel cell system 100 according to Embodiment 1 at the time of the power generation operation will be described with reference to Fig. 1. Note that the following operations are executed by the controller 110 for controlling the various devices in the fuel cell system 100.

First, the fuel gas supplying unit 106 is activated to supply the fuel gas to the anode 11A of the fuel cell 101. Also, the oxidizing gas supplying unit 107 is activated to supply the oxidizing gas to the cathode 11B of the fuel cell 101. In the fuel cell 101, the fuel gas supplied to the anode 11A and the oxidizing gas supplied to the cathode 11B electrochemically react with each other, so that water is produced and at the same time electricity and heat are generated. The generated electricity is supplied to external power loads by an output controller unit, which is not shown. In addition, the generated heat is recovered by the cooling water flowing through the cooling water passage 71, and the fuel cell 101 is cooled. Moreover, the steam in the unused reaction gas and the produced water are recovered in the recovered water tank 104.

As described above, germs may enter from the air release port of the off-fuel-gas passage 75 or the off-oxidizing-gas passage 76, or from the outlet port of the water discharge passage 104A of the recovered water tank 104, or the like. When the germs that have entered propagate in the recovered water tank 104, the water circulating passage 72, and the like, clogging, narrowing or the like of the water circulating passage 72 may occur. Consequently, a water supply function and a water purification function may be impaired. In particular, in such a case that the power supply utility 111 undergoes a power failure and the power supply to the fuel cell system 100 stops (in the case that a power failure of the fuel cell system 100 occurs), it is more likely that the germs propagate because the temperature increasing process of, for example, increasing the temperature of the recovered water, cannot be executed.

However, the fuel cell system 100 according to Embodiment 1 is controlled in such a manner that, if the power supply detection unit detected a power failure of the fuel cell system 100 and thereafter the power failure of the fuel cell system 100 has been recovered, the heater 103 and the water circulation unit 105 are operated to execute the temperature increasing process of increasing the temperature of the recovered water in the recovered water tank 104 to a predetermined temperature or higher.

Here, when a primary purpose is the sterilization of a mold (for example, Neosartorya pseudofischeri) as the germ in the fuel cell system 100 according to Embodiment 1, the controller 110 controls the operation amounts of the heater 103 and the water circulation unit 105 so that the temperature of the cooling water in the cooling water tank 102 will reach about 70°C and the temperature of the recovered water in the recovered water tank 104 will reach 45°C or higher. Specifically, the controller 110 causes the water circulation unit 105 to be operated intermittently, and causes the water circulation unit 105 to be stopped at the end of the temperature increasing process.

Althoyugh Embodiment I employs the configuration in which the controller 110 causes the water circulation unit 105 to be operated intermittently, the present invention is not limited to this. It is also possible to employ a configuration in which the flow rate of the water that flows through the water circulating passage 72 is controlled by the water circulation unit 105 by varying the voltage value, current value, frequency, duty ratio, and the like supplied to the water circulation unit 105.

The duration of time for which the temperature increasing process is executed by operating the heater 103 and the water circulation unit 105 can be set appropriately to such a duration that allows heat-sterilizing of the recovered water to reduce the quantity of germs to a degree that the water supply function and the purification function of the purifier 109 are not impaired because of clogging, narrowing or the like of the water circulating passage 72. More specifically, the time for which the temperature increasing process is executed is set based on the configuration and operating conditions of the fuel cell system 100, such as the temperatures in the cooling water tank 102 and the recovered water tank 104 (i.e., the operation amount of the heater 103), taking into consideration that when the temperature of the recovered water in the recovered water tank 104 is higher, the heat sterilization effect is greater. In Embodiment 1, the time is set to 2 hours.

The fuel cell system 100 according to Embodiment 1 configured as described above can suppress the propagation of the germs contained in the recovered water by increasing the temperature of the recovered water to a predetermined temperature or higher, by supplying the cooling water heated by the heater 103 to the recovered water tank 104.

When using an ion-exchange resin as the purifier 109, the heat-resistant temperature of the ion-exchange resin is relatively low, and such a tendency is especially noticeable when using an anion-exchange resin. For this reason, it is preferable to set the operation amounts of the heater 103 and the purifier 109 and the duration of the temperature increasing process, in view of the temperature of the water that flows through the purifier 109.

Although Neosartorya pseudofischeri is exemplarily described as the germ that is the target of the sterilization in Embodiment 1, the present invention is not limited to this. The target of the sterilization may be other germs. It is also possible that the target of the sterilization may be a plurality of kinds of germs.

### [Modified Example 1]

As modified example 1 of Embodiment 1, the system may be controlled so as to execute the following temperature increasing process. When the power supply determination unit 110a determines that a power failure of the fuel cell system 100 has occurred based on the voltage value and the phase of the voltage waveform that are input from the power supply detector 112 and determines that the power failure of the fuel cell system 100 has been recovered based on the voltage value, the temperature of the water in the recovered water tank 104 is increased to a predetermined temperature or higher by operating the water circulation unit 105 and utilizing the heat generated by the fuel cell, during the time for which the fuel cell 101 is generating electric power after the power failure was recovered.

This makes it possible to obtain advantageous effects similar to those obtained by Embodiment 1 without using a heater, and it is also possible to employ a configuration that does not have the heater.

### (Embodiment 2)

A fuel cell system according to Embodiment 2 of the present invention illustrates as an example an embodiment in which the controller is configured to execute the temperature increasing process if the state in which the electric power is not supplied to the fuel cell system has continued for a first predetermined time or longer.

The configuration of a fuel cell system 100 according to Embodiment 2 of the present invention is the same as that of the fuel cell system 100 according to Embodiment 1, and therefore, the description thereof will not be repeated.

### [Operation of Fuel Cell System]

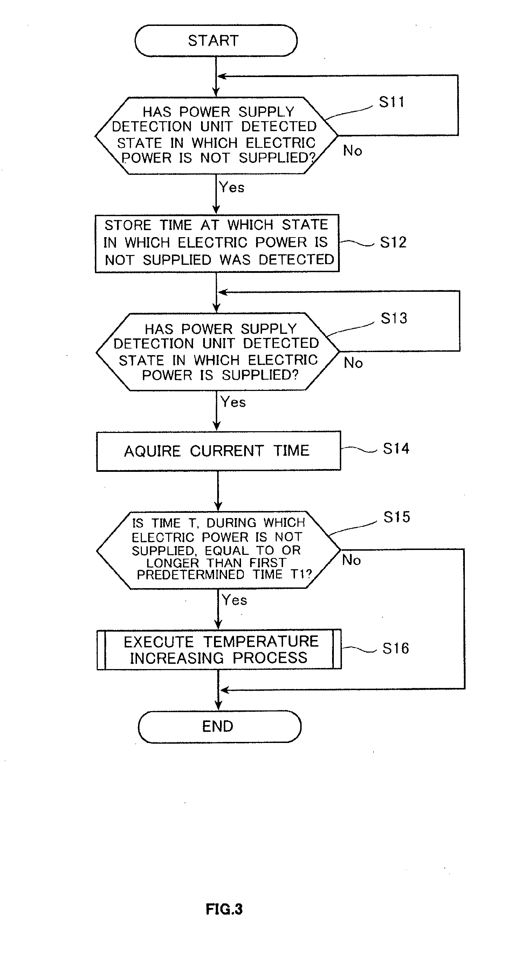

Fig. 3 is a flowchart schematically illustrating a temperature increasing operation in a fuel cell system according to Embodiment 2 of the present invention.

As illustrated in Fig. 3, the controller 110 determines whether or not the power supply detection unit has detected the state in which the electric power is not supplied to the fuel cell system 100 (step S11). Specifically, it is determined by whether or not the power supply determination unit 110a determines the electric power is not supplied to the fuel cell system 100.

The controller 110 repeats step S11 until it detects the state in which the electric power is not supplied to the fuel cell system 100 if the power supply detection unit is not detecting the state in which the electric power is not supplied to the fuel cell system 100 (i.e., if the power supply determination unit 110a determines that the electric power is not supplied to the fuel cell system 100) (No at step S11). On the other hand, the controller 110 proceeds to step S12 if the power supply detection unit detects the state in which the electric power is not supplied to the fuel cell system 100 (i.e., the power supply determination unit 110a determines that the electric power is not supplied to the fuel cell system 100) (Yes at step S11).

At step S12, the controller 110 causes a storage unit, not shown, to store the time at which the state in which the electric power is not supplied to the fuel cell system 100 was detected. Then, the controller 110 determines whether or not the power supply detection unit has detected a state in which the electric power is supplied to the fuel cell system 100 (step S13). Specifically, the controller 110 performs determination, by whether or not the power supply determination unit 110a determines the state in which the electric power is supplied to the fuel cell system 100.

If the power supply detection unit detects the state in which the electric power is supplied to the fuel cell system 100 (i.e., the power supply determination unit 110a determines the state in which the electric power is supplied to the fuel cell system 100) (Yes at step S13), the controller 110 proceeds to step S14. Note that the controller 110 stays at step S13 until the state in which the electric power is not supplied to the fuel cell system 100 ends.

At step S14, the controller 110 acquires a current time. Subsequently, the controller 110 calculates the time during which electric power is not supplied (time T) by comparing the time stored at step S12 to the current time acquired at step S 14, and determines whether or not the time T is equal to or longer than a first predetermined time T1 (step S15). Here, the first predetermined time T1 may be set as desired. For example, the time it may take for germs to propagate in the recovered water tank 104, the water circulating passage 72, or the like and cause clogging, narrowing or the like of the water circulating passage 72 may be obtained in advance through an experiment or the like, and the obtained time may be set as the first predetermined time T1. Specifically, the first predetermined time T1 may be set to 3 days, or may be set to one week, for example.

The controller 110 terminates the present program as it is if the time T is less than the first predetermined time T1 (No at step S15). Thus, a waste of energy can be inhibited and energy saving performance can be improved by not executing an unnecessary temperature increasing process if it is determined that propagation of germs is not taking place.

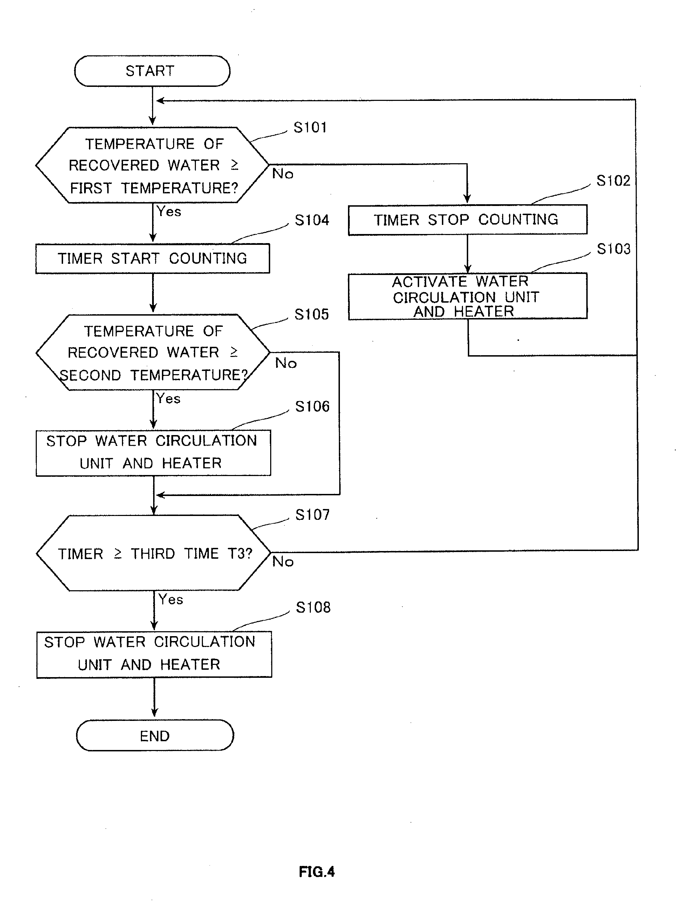

On the other hand, the controller 110 activates the heater 103 and the water circulation unit 105 to execute the temperature increasing process (step S16) if the time T is equal to or longer than the first predetermined time T1 (Yes at step S15). Here, the temperature increasing process will be described in detail with reference to Fig. 4.

Fig. 4 is a flowchart illustrating specific operation of the temperature increasing process shown in Fig. 3. It should be noted that the operation of the temperature increasing process shown in Fig. 4 is merely an example, and the operation times of the heater 103 and the water circulation unit 105 and the operation amounts thereof are not limited as long as the temperature of the recovered water in the recovered water tank 104 can be increased to a predetermined temperature or higher by operating the heater 103 and the water circulation unit 105.

As illustrated in Fig. 4, the controller 110 acquires the temperature of the recovered water from the temperature detector 118 and determines whether or not the temperature of the recovered water is equal to or higher than a first temperature (step S101). The first temperature can be set as desired, and specifically, the first temperature can be set appropriately depending on the type of the germ that is the target of sterilization. The first temperature may be 30°C to 40°C, for example, or may be 45°C.

The controller 110 proceeds to step S102 if the temperature of the recovered water is lower than the first temperature (No at step S101). At step S102, the controller 110 stops the counting of a timer that measures the time for which the temperature increasing process is executed. Subsequently, the controller 110 activates the heater 103 and the water circulation unit 105 (step S103) and returns to step S101.

Thus, the controller 110 repeats steps S101 to S103 until the temperature of the recovered water becomes equal to or higher than the first temperature. Then, the controller 110 proceeds to step S104 if the temperature of the recovered water becomes equal to or higher than the first temperature (Yes at step S101).

At step S104, the controller 110 starts the counting of the timer that measures the time for which the temperature increasing process is executed. Then, the controller 110 again acquires the temperature of the recovered water from the temperature detector 118 and determines whether or not the temperature of the recovered water is equal to or higher than a second temperature (step S105). The second temperature can be set as desired, and can be set appropriately depending on the type, capacity or the like of the ion-exchange resin that is used for the purifier 109. The second temperature may be 50°C, for example.

The controller 110 proceeds to step S107 if the temperature of the recovered water is equal to or higher than the second temperature (Yes at step S105), and proceeds to step S106 if the temperature of the recovered water is lower than the second temperature (No at step S105). At step S106, the controller 110 stops the water circulation unit 105 and the heater 103. Subsequently, the controller 110 proceeds to step S107. Thus, the temperature increase of the recovered water stops. Since excessive temperature increase of the recovered water is prevented, the ion-exchange resin of the purifier 109 is inhibited from deterioration resulting from heat. In addition, unnecessary consumption of energy is avoided, and thereby energy saving performance can be improved.

At step S107, the controller 110 determines whether or not the time measured by the timer is equal to or longer than a third time. Here, the third time can be set appropriately. The third time may be calculated based on the D-value of the target germ (i.e., the temperature increasing time required for reducing the number of bacteria to 1/10 at a predetermined temperature). Alternatively, the time it takes to reduce the quantity of the germ to such a quantity at which the water supply function by the water circulation unit 105 and the water purification function executed by the purifier 109 are not impaired is obtained in advance through an experiment or the like, and the obtained time may be set as the third time.

If the time measured by the timer is less than the third time (No at step S107), the controller 110 returns to step S101 and repeats steps S101 to S107 until the time measured by the timer becomes equal to or longer than the third time. On the other hand, the controller 110 proceeds to step S108 if the time measured by the timer is equal to or longer than the third time (Yes at step S107).

At step S108, the controller 110 stops the water circulation unit 105 and the heater 103 and thereafter terminates the present program.

Thus, the fuel cell system 100 according to Embodiment 2 can inhibit propagation of germs by performing the temperature increasing process at appropriate timing. In addition, the fuel cell system 100 can inhibit a waste of energy and improve energy saving performance by not executing an unnecessary temperature increasing process.

Although Embodiment 2 employs the configuration in which the time T of the state in which the electric power is not supplied to the fuel cell system 100 is calculated and the heating process is executed if the time T is equal to or longer than the first predetermined time T1, the present invention is not limited to this. For example, the controller 110 may be configured as follows. At step S12, the controller 110 may store not only the time at which it detected the state in which the electric power is not supplied but also a temperature t (which may be a temperature within the fuel cell system 100 or may be a temperature outside the fuel cell system 100) at the time when it detected the state in which the electric power is not supplied. At step S 15, the controller 110 may execute the temperature increasing process when the time T is equal to or longer than the first predetermined time T1 and also the temperature t is within a predetermined temperature range t1.

Or, the controller 110 may be configured as follows. At step S14, the controller 110 may detect a temperature t (which may be a temperature within the fuel cell system 100 or may be a temperature outside the fuel cell system 100) at the time when it detected the state in which the electric power is supplied. At step S15, the controller 110 may execute the temperature increasing process when the time T is equal to or longer than the first predetermined time T1 and also the temperature t at the time when it detected the state in which the electric power is supplied is within the predetermined temperature range t1. Furthermore, the controller 110 may be configured to execute the temperature increasing process at step S15 when the time T is equal to or longer than the first predetermined time T1 and also the temperature t at the time when it detected the state in which the electric power is not supplied and the temperature t at the time when it detected the state in which the electric power is supplied are within the predetermined temperature range t1.

Or, the second temperature and the third time T3 can be calculated based on the D-value and Z-value (i.e., the temperature increase difference required for changing the D-value to 1/10 or to 10 times) of the target germ. Moreover, the germ that is the target is not limited to one kind, and a plurality of kinds of germs may be the target. In this case, the second temperature and the third time T3 may be calculated based on the D-value and the Z-value of the germ that requires the most severe sterilization condition, or alternatively, they may be calculated using the average values of the D-values and Z-values of those germs.

### [Modified Example 1]

Next, a modified example of the fuel cell system according to Embodiment 2 will be described.

A fuel cell system of modified example 1 in Embodiment 2 illustrates, as an example, an embodiment in which: the controller is configured to execute the temperature increasing process at every second predetermined time; the controller is configured to execute the temperature increasing process if the power supply detection unit detects a change from a state in which the electric power is not supplied to a state in which the electric power is supplied and the time that has elapsed from the previous temperature increasing process is equal to or longer than the second predetermined time; and the controller is configured not to execute the temperature increasing process if the time that has elapsed from the previous temperature increasing process is less than the second predetermined time, even when the power supply detection unit detects a change from a state in which the electric power is not supplied to a state in which the electric power is supplied.

The configuration of the fuel cell system 100 of modified example 1 of Embodiment 2 is the same as that of the fuel cell system 100 according to Embodiment 1, and therefore, the description thereof will not be repeated.

### [Operation of Fuel Cell System]

In the fuel cell system 100 of the present modified example 1, the controller 110 is configured to execute the temperature increasing process at every second predetermined time T2. Here, the second predetermined time T2 may be set as desired. For example, the time it may take for germs to propagate in the recovered water tank 104, the water circulating passage 72, or the like and cause clogging, narrowing or the like of the water circulating passage 72 may be obtained in advance through an experiment or the like, and the obtained time may be set as the second predetermined time T2. Specifically, the second predetermined time T2 may be set to 3 days, or may be set to one week, for example.

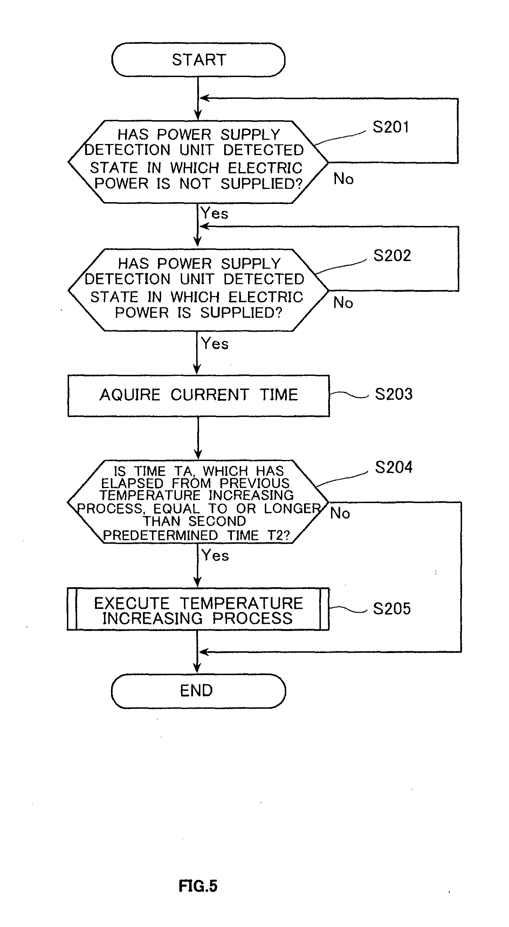

Fig. 5 is a flowchart schematically illustrating a temperature increasing operation in a fuel cell system of the present modified example 1.

As illustrated in Fig. 5, the controller 110 determines whether or not the power supply detection unit has detected the state in which the electric power is not supplied to the fuel cell system 100 (step S201). The controller 110 repeats step S201 until it detects the state in which the electric power is not supplied to the fuel cell system 100 if the power supply detection unit is not detecting the state in which the electric power is not supplied to the fuel cell system 100 (No at step S201). On the other hand, the controller 110 proceeds to step S202 if the power supply detection unit detects the state in which the electric power is not supplied to the fuel cell system 100 (Yes at step S201).

At step S202, the controller 110 determines whether or not the power supply detection unit has detected the state in which the electric power is supplied to the fuel cell system 100. If the power supply detection unit has detected the state in which the electric power is not supplied to the fuel cell system 100 (Yes at step S201), the controller 110 proceeds to step S203. Note that the controller 110 stays at step S202 until the state in which the electric power is not supplied to the fuel cell system 100 ends.

At step S203, the controller 110 acquires a current time. Subsequently, the controller 110 calculates time (time TA) that has elapsed from a previous temperature increasing process from the time at which the previous temperature increasing process was executed and the current time acquired at step S 14, and determines whether or not the time TA is equal to or longer than the second predetermined time T2 (step S204).

The controller 110 terminates the present program as it is if the time TA is less than the second predetermined time T2 (No at step S204). Thus, a waste of energy can be inhibited and energy saving performance can be improved by not executing an unnecessary temperature increasing process if it is determined that propagation of germs is not taking place.

On the other hand, the controller 110 activates the heater 103 and the water circulation unit 105 to execute the temperature increasing process (step S205) if the time TA is equal to or longer than the second predetermined time T2 (Yes at step S204). Note that the temperature increasing process is conducted in the same manner as described in Embodiment 2, so the detailed description thereof will not be made.

The fuel cell system 100 of the present modified example 1 configured in such a manner can also obtain advantageous effects similar to those obtained by the fuel cell system 100 according to Embodiment 2.

### (Embodiment 3)

A fuel cell system according to Embodiment 3 of the present invention illustrates, as an example, an embodiment in which: the system further includes a water level detector provided in at least one tank of the recovered water tank and the cooling water tank; the controller is configured to execute the temperature increasing process if the power supply detection unit detects a change from a state in which the electric power is not supplied to a state in which the electric power is supplied and the water level detected by the water level detector is equal to or higher than a first water level; and the controller is configured not to execute the temperature increasing process if the water level detected by the water level detector is less than the first water level, even when the power supply detection unit detects the change from the state in which the electric power is not supplied to the state in which the electric power is supplied.

### [Configuration of Fuel Cell System]

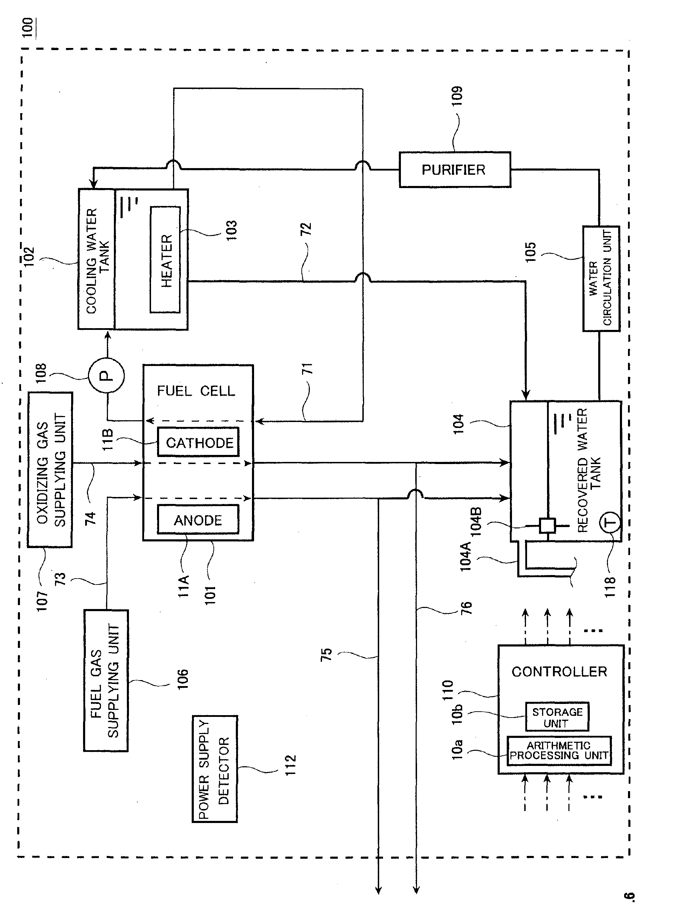

Fig. 6 is a block diagram schematically illustrating the overall construction of a fuel cell system according to Embodiment 3 of the present invention.

As illustrated in Fig. 6, a fuel cell system 100 according to Embodiment 4 of the present invention has the same basic configuration as that of the fuel cell system 100 of Embodiment 1, but is different therefrom in that a water level detector 104B is provided in the recovered water tank 104. The water level detector 104B may have any configuration as long as it can detect the water level in the recovered water tank 104. For example, a float-type water level sensor may be used.

### [Operation of Fuel Cell System]

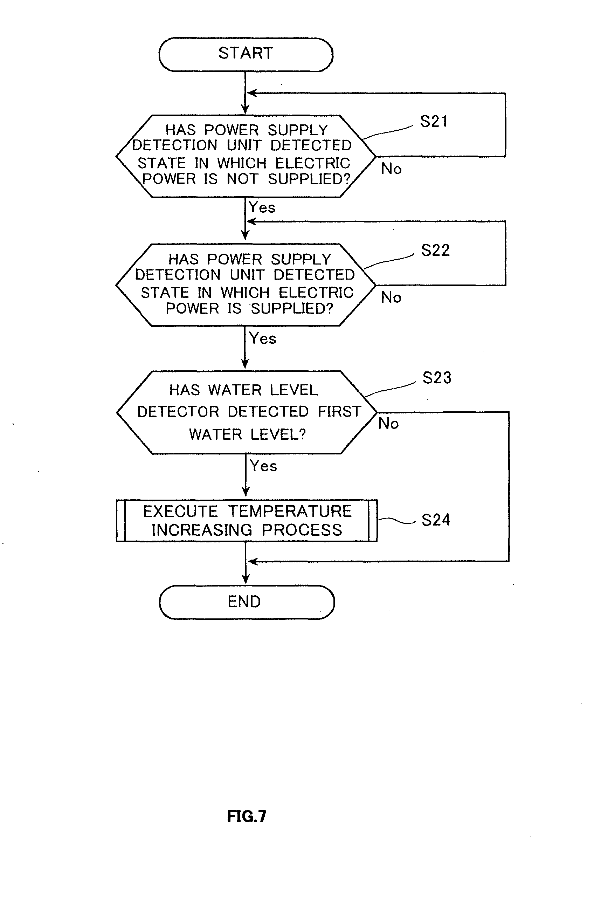

Fig. 7 is a flowchart schematically illustrating a temperature increasing operation in a fuel cell system according to Embodiment 3 of the present invention.

As illustrated in Fig. 7, the controller 110 determines whether or not the power supply detection unit has detected the state in which the electric power is not supplied to the fuel cell system 100 (step S21). The controller 110 repeats step S21 until it detects the state in which the electric power is not supplied to the fuel cell system 100 if the power supply detection unit is not detecting the state in which the electric power is not supplied to the fuel cell system 100 (No at step S21). On the other hand, the controller 110 proceeds to step S22 if the power supply detection unit detects the state in which the electric power is not supplied to the fuel cell system 100 (Yes at step S21).

At step S22, the controller 110 determines whether or not the power supply detection unit has detected the state in which the electric power is supplied to the fuel cell system 100. If the power supply detection unit has detected the state in which the electric power is supplied to the fuel cell system 100 (Yes at step S22), the controller 110 proceeds to step S23. Note that the controller 110 stays at step S22 until the state in which the electric power is not supplied to the fuel cell system 100 ends.

At step S23, the controller 110 determines whether or not the water level detector 104B is detecting a first water level. Here, the first water level can be set as desired. Herein, the first water level is set to be the water level at which water exists in the recovered water tank 104. The first water level may be, for example, 1/3, 1/2, or 2/3 of a height h of the recovered water tank 104.

The controller 110 terminates the present program if the water level detector 104B is not detecting the first water level (No at step S23). The reason for this termination is that when there is no water in the recovered water tank 104, it can be regarded that there is no water in the water circulating passage 72 either, so clogging, narrowing or the like of the water circulating passage 72 due to propagation of germs does not occur. As a result, execution of an unnecessary temperature increasing process can be avoided, and energy saving performance can be improved.

On the other hand, the controller 110 executes the temperature increasing process (step S23) if the water level detector 104B is detecting the water level of the recovered water tank 104 (Yes at step S23), and terminates the present program. Note that the temperature increasing process in step S24 is the same as that in Embodiment 2, so the detailed description thereof will not be made.

Thus, the fuel cell system 100 according to Embodiment 3 can also obtain advantageous effects similar to those obtained by the fuel cell system 100 according to Embodiment 2. In addition, the fuel cell system 100 according to Embodiment 3 can avoid an unnecessary temperature increasing process and improve energy saving performance.

Although Embodiment 3 employs the configuration in which a water level detector is provided in the recovered water tank 104, the present invention is not limited to this. It also is possible to employ a configuration in which a water level detector is provided in the cooling water tank 102, and it also is possible to employ a configuration in which water level detectors are provided in both the cooling water tank 102 and the recovered water tank 104.

### [Modified Example 1]

Next, a modified example of the fuel cell system according to Embodiment 3 will be described.

A fuel cell system of modified example 1 of Embodiment 3 illustrates, as an example, an embodiment in which: the system further includes a water supplying unit configured to supply water to a tank in which the water level detector is provided; and the controller is configured to activate the water supplying unit if the water level detected by the water level detector is less than a first water level and to execute the temperature increasing process after the water level detected by the water level detector has become equal to or higher than the first water level.

### [Configuration of Fuel Cell System]

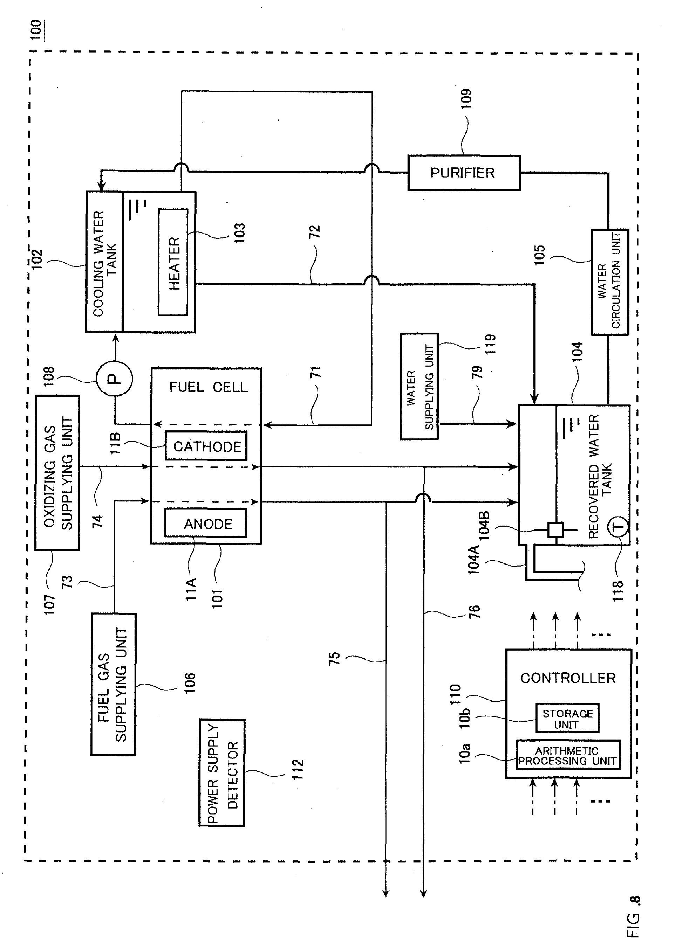

Fig. 8 is a block diagram schematically illustrating the overall construction of a fuel cell system of the present modified example 1.

As illustrated in Fig. 8, the fuel cell system 100 of the present modified example 1 has the same basic configuration as that of the fuel cell system 100 of Embodiment 3, but is different in that a water supplying unit 119 for supplying water is connected to the recovered water tank 104. Specifically, the water supplying unit 119 is connected to the recovered water tank 104 via a water supply passage 79. The water supplying unit 119 is connected to, for example, a water pipe and a main valve of the water supply (not shown) so that it supplies water (tap water herein) to the recovered water tank 104 via the water supply passage 79. As the water supplying unit 119, it is possible to use a pump along with a flow control valve or an on/off valve.

Although the present modified example employs the configuration in which the water supplying unit 119 is connected to the recovered water tank 104, the present invention is not limited to this. It is also possible to employ a configuration in which the water supplying unit 119 is connected to the water circulating passage 72. It is also possible to employ a configuration in which the water supplying unit 119 is connected to the cooling water tank 102. In addition, the water supplying unit 119 may use a cartridge tank that stores water therein.

### [Operation of Fuel Cell System]

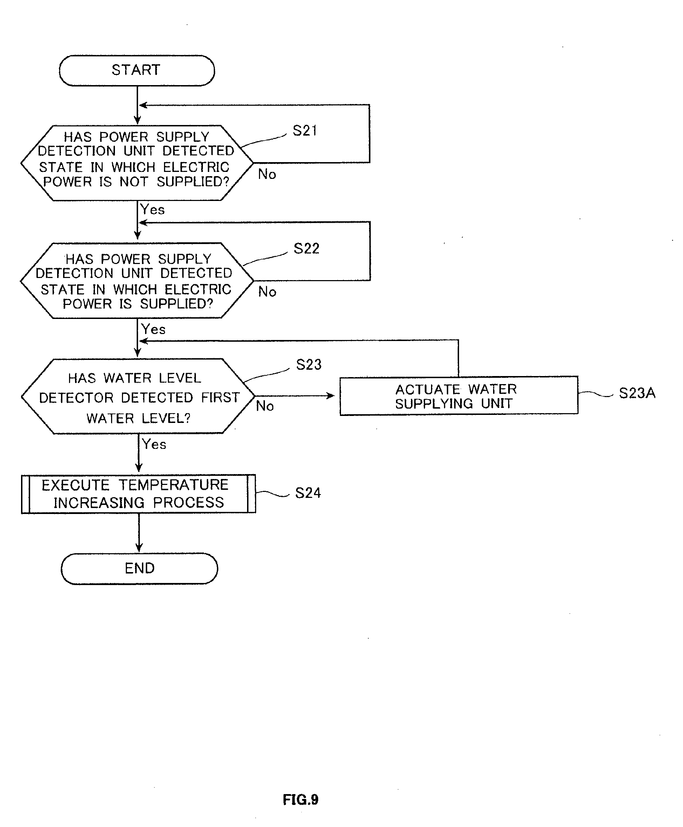

Fig. 9 is a flowchart schematically illustrating a temperature increasing operation in a fuel cell system of the present modified example 1.

As illustrated in Fig. 9, the basic operation of the temperature increasing operation in the fuel cell system 100 of the present modified example 1 is the same as that of the fuel cell system 100 of Embodiment 3, but the operation executed in a case where the water level detector 104B is not detecting the first water level at step S23 is different.

Specifically, if the water level detector 104B is not detecting the first water level (No at step S23), the controller 110 activates the water supplying unit 119 to supply water to the recovered water tank 104 (step S23A). Then, if the water level detector 104B detects the first water level (Yes at step S23), the controller 110 executes the temperature increasing process (step S24). If the water level detector 104B detects the first water level, the controller 110 stops the water supplying unit 119.

Thereby, propagation of germs can suppressed when water exists in, for example, in the recovered water tank 104 or the water circulating passage 72. As a result, the fuel cell system 100 of the present modified example 1 can also obtain advantageous effects similar to those obtained by the fuel cell system 100 according to Embodiment 3.

### [Modified Example 2]

A fuel cell system of the present modified example 2 illustrates, as an example, an embodiment in which: the system further includes a water supplying unit configured to supply water to a tank in which the water level detector is provided; and the controller is configured to activate the water supplying unit if the water level detected by the water level detector is less than the first water level and to execute the temperature increasing process when a third predetermined time has elapsed after the water level detected by the water level detector has become equal to or higher than the first water level.

The configuration of the fuel cell system 100 of modified example 2 of Embodiment 3 is the same as that of the fuel cell system 100 according to Embodiment 3, and therefore, the description thereof will not be repeated.

### [Operation of Fuel Cell System]

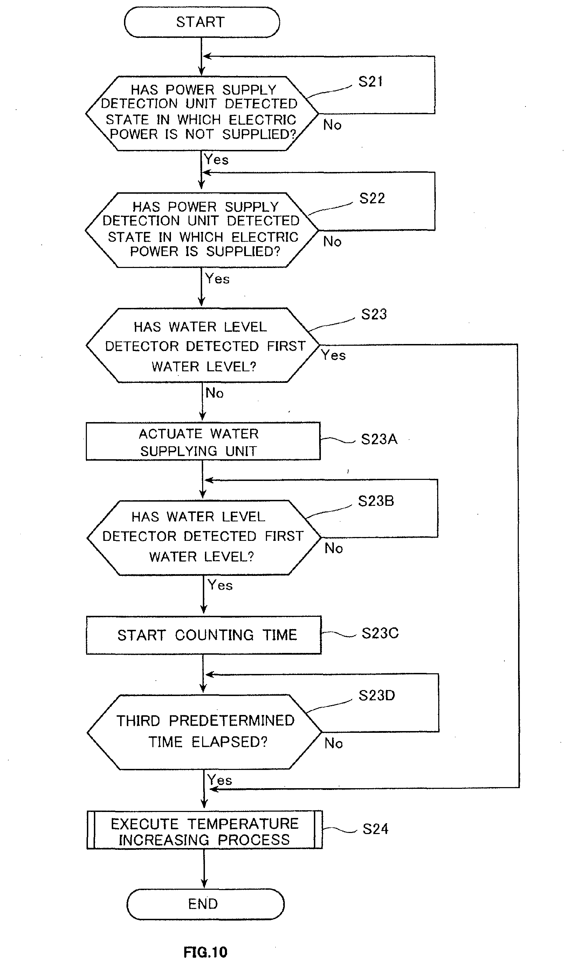

Fig. 10 is a flowchart schematically illustrating a temperature increasing operation in a fuel cell system of the present modified example 2.

As illustrated in Fig. 10, the basic operation of the temperature increasing operation in the fuel cell system 100 of the present modified example 2 is the same as that of the fuel cell system 100 of Embodiment 3, but the operation executed in a case where the water level detector 104B is not detecting the first water level at step S23 is different.

Specifically, if the water level detector 104B is not detecting the first water level (No at step S23), the controller 110 activates the water supplying unit 119 to supply water to the recovered water tank 104 (step S23A).

If the water level detector 104B detects the first water level (Yes at step S23B) after the first water supplying unit 119 is activated, then the controller 110 causes a timer which is not shown, to start counting time (step S23C). If the water level detector 104B detects the first water level, the controller 110 stops the water supplying unit 119.

Next, the controller 110 determines whether or not time TB, which has elapsed from the start of counting time at step S23C, has passed the third predetermined time (step S23D). Here, the third predetermined time may be set as desired. For example, the time it may take for germs to propagate in the recovered water tank 104, the water circulating passage 72, or the like and cause clogging, narrowing or the like of the water circulating passage 72 may be obtained in advance through an experiment or the like, and the obtained time may be set as the third predetermined time. Specifically, the third predetermined time T3 may be set to 3 days, or may be set to one week, for example.

The controller 110 repeats step S23D until the time TB has passed the third predetermined time T3 (i.e., until the time TB reaches the third predetermined time T3 or longer) if the time TB has not yet passed the third predetermined time T3 (No at step S23D). The water supplied by the water supplying unit 119 contains a chlorine component because it is the tap water. This means that when the amount of the water supplied to the recovered water tank 104 is greater, the propagation of germs can be suppressed more effectively. Therefore, propagation of germs can be suppressed even without executing the temperature increasing process until the third predetermined time has elapsed. Thus, execution of an unnecessary temperature increasing process can be avoided, and energy saving performance can be improved.

On the other hand, if the time TB becomes equal to or longer than the third predetermined time T3 (Yes at step S23D), the controller 110 activates the heater 103 and the water circulation unit 105 to execute the temperature increasing process (step S24).

The fuel cell system 100 of the present modified example 2 configured in such a manner can also obtain advantageous effects similar to those obtained by the fuel cell system 100 according to Embodiment 3.

### (Embodiment 4)

A fuel cell system according to Embodiment 4 of the present invention illustrates, as an example, an embodiment in which: the system further include; a storage unit configured to store whether or not water drainage of the fuel cell system has been executed; and the controller is configured to execute the temperature increasing process if the water drainage has not been executed.

Herein, the term "drainage of the fuel cell system" means discharging of the water inside of the cooling water tank, the recovered water tank, and the water circulating passage through a water drain passage to outside of the fuel cell system by opening a water drain valve.

The term "water-filling of the fuel cell system" means supplying water into any one of the cooling water tank, the recovered water tank, and the water circulating passage.

### [Configuration of Fuel Cell System]

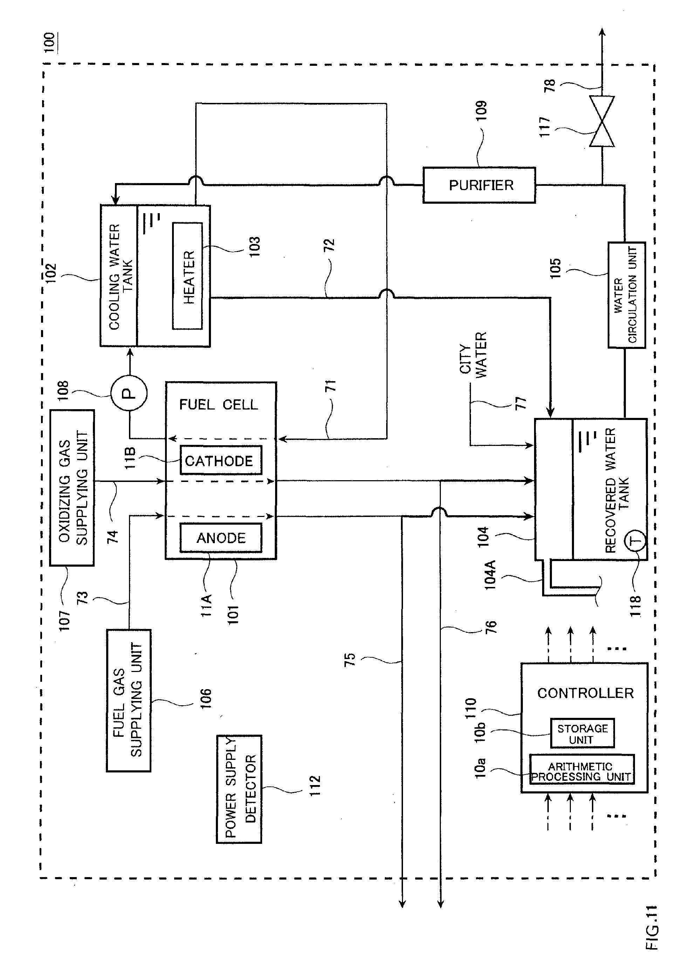

Fig. 11 is a block diagram schematically illustrating the overall construction of a fuel cell system according to Embodiment 4 of the present invention.

As illustrated in Fig. 11, a fuel cell system 100 according to Embodiment 4 of the present invention has the same basic configuration as that of the fuel cell system 100 of Embodiment 1. However, it is different therefrom in that a water supply passage 77 for supplying city water to the recovered water tank 104 is provided, that a water drain passage 78 is provided at an intermediate portion of the water circulating passage 72, and that a water drain valve 117 is provided at an intermediate portion of the water drain passage 78. The water drain valve 117 may be of any type as long as it can permit/block the flow of the water in the water drain passage 78. For example, it is possible to use a valve such as a manually operated valve or a solenoid valve. The storage unit 10b of the controller 110 stores whether or not the water drainage of the fuel cell system 100 has been executed. In other words, when the arithmetic processing unit 10a executes the water drainage of the fuel cell system 100, the storage unit 10b stores data of the execution of the water drainage. In addition, when water-filling of the fuel cell system 100 is executed, the storage unit 10b erases the data of the execution of the water drainage.

Although Embodiment 4 employs the configuration in which the water supply passage 77 is connected to the recovered water tank 104, the present invention is not limited to this. It is also possible to employ a configuration in which the water supply passage 77 is connected to the water circulating passage 72 so that the water purified by the purifier 109 is supplied to the cooling water tank 102. In addition, although the configuration in which the water drain passage 78 is connected to an intermediate portion of the water circulating passage 72 is employed, the present invention is not limited to this. It is also possible to employ a configuration in which the water drain passage 78 is connected to the cooling water tank 102 or the recovered water tank 104.

### [Operation of Fuel Cell System]

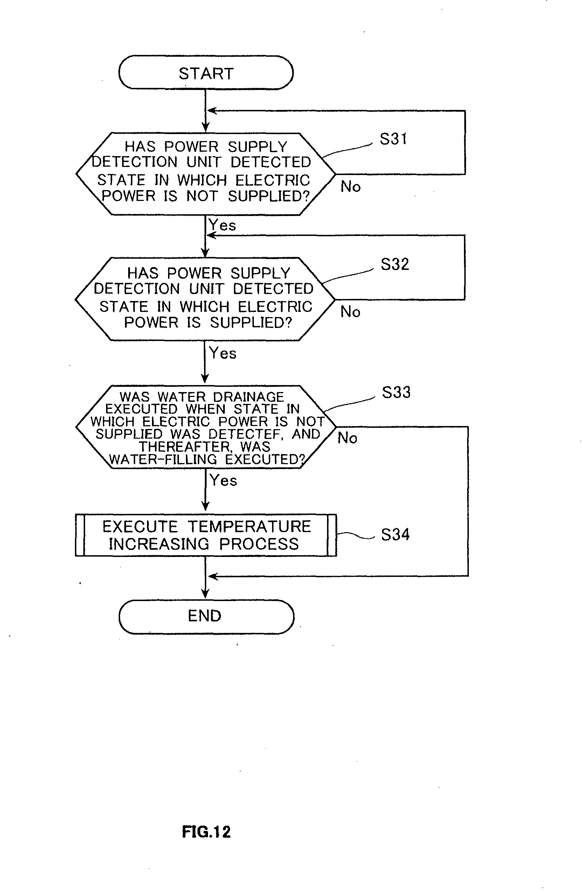

Fig. 12 is a flowchart schematically illustrating a temperature increasing operation in a fuel cell system according to Embodiment 4 of the present invention.

As illustrated in Fig. 12, steps S31 and S32 in the temperature increasing operation of the fuel cell system according to Embodiment 4 are the same as steps S21 and S22 in the temperature increasing operation in Embodiment 3, but the operations thereafter are different. Specifically, at step S33, the controller 110 determines whether or not the storage unit 10b contains that water drainage of the fuel cell system 100 has been executed, when the power supply detection unit detects the state in which the electric power is not supplied to the fuel cell system 100.

If the storage unit 10b contains that water drainage of the fuel cell system 100 has been executed, when the state in which the electric power is not supplied to the fuel cell system 100 is detected (if water drainage of the fuel cell system 100 was executed when the state in which the electric power is not supplied to the fuel cell system 100 was detected, and thereafter, water-filling has not been executed) (No at step S33), the controller 110 terminates the present program. The reason for this termination is that when there is no water in the recovered water tank 104 and the like, clogging, narrowing, or the like of the water circulating passage 72 due to propagation of germs does not occur. As a result, execution of an unnecessary temperature increasing process can be avoided, and energy saving performance can be improved.

On the other hand, if the storage unit 10b does not contain that water drainage of the fuel cell system 100 has been executed, when the state in which the electric power is not supplied to the fuel cell system 100 is detected (Yes at step S33), the controller 110 executes the temperature increasing process (step S34) and terminates the present program. Note that the temperature increasing process in step S34 is the same as the sterilization process in Embodiment 2, so the detailed description thereof will not be made.

Thus, the fuel cell system 100 according to Embodiment 4 can also obtain advantageous effects similar to those obtained by the fuel cell system 100 according to Embodiment 3.

### (Embodiment 5)

A fuel cell system according to Embodiment 5 of the present invention illustrates, as an example, an embodiment including: a fuel cell; a cooling water passage configured to allow cooling water for cooling the fuel cell to flow therethrough; a cooling water tank provided in the cooling water passage and configured to store the cooling water; a recovered water tank configured to store water recovered from an exhaust gas produced by the fuel cell system; a water circulating passage configured to allow water circulating between the recovered water tank and the cooling water tank to flow therethrough; a heater provided in one of the cooling water passage, the recovered water tank, and the water circulating passage; a water circulation unit provided in the water circulating passage, the water circulation unit being configured to circulate water between the recovered water tank and the cooling water tank; and a controller configured to execute a temperature increasing process for increasing the temperature of the water in the recovered water tank to a predetermined temperature or higher, by operating the water circulation unit for a predetermined time after the fuel cell stops electric power generation, and operating the heater and the water circulation unit when a second time has elapsed after the water circulation unit stopped.

### [Operation of Fuel Cell System]

The configuration of a fuel cell system 100 according to Embodiment 5 of the present invention is the same as that of the fuel cell system 100 according to Embodiment 1, and therefore, the detailed description about the configuration will not be repeated. The fuel cell system 100 according to Embodiment 5 operates in the same manner as does the fuel cell system 100 of Embodiment 1 during the electric power generation operation, but it is different from Embodiment 1 in that the operation after the stop of the electric power generation is executed in the following manner.

First, if the user of the fuel cell system 100 instructs the fuel cell system 100 to stop by manually operating a remote controller which is not shown, or if a preset stop time of the fuel cell system 100 is reached, the controller 110 outputs a stop command for the fuel cell system 100. Subsequently, the controller 110 stops the fuel gas supplying unit 106 and the oxidizing gas supplying unit 107.

This stops the supply of the fuel gas from the fuel gas supplying unit 106 to the anode 11A of the fuel cell 101, and also stops the supply of the oxidizing gas from the oxidizing gas supplying unit 107 to the cathode 11B of the fuel cell 101. Accordingly, electric power generation is stopped in the fuel cell 101.

In addition, the controller 110 stops the operation of the fluid sending unit 108 to stop the circulation of the cooling water. At this point, because the cooling water has recovered the waste heat in the fuel cell 101 during the electric power generation by the fuel cell 101, the cooling water in the cooling water tank 102 has a level of heat that can increase the temperature of the water in the water circulating passage 72 and the recovered water tank 104 to a predetermined temperature or higher.

Then, the controller 110 causes the water circulation unit 105 to operate for a predetermined time and thereafter stops it. Thereby, the water in the cooling water tank 102 is supplied to the recovered water tank 104 through the water circulating passage 72, and the water in the recovered water tank 104 is supplied to the cooling water tank 102 through the water circulating passage 72. In other words, water circulation is executed between the cooling water tank 102 and the recovered water tank 104. Here, the predetermined time refers to the time necessary for increasing the temperature of the water in the recovered water tank 104 to a predetermined temperature or higher. For example, the predetermined time may be set appropriately from the water temperature and water amount in the cooling water tank 102, the water temperature and water amount in the recovered water tank 104, and the operation amount of the water circulation unit 105.

Thus, the fuel cell system 100 according to Embodiment 5 can kill the germs that have entered the recovered water tank 104 and the water circulating passage 72 during the electric power generation operation of the fuel cell system 100 by performing a temperature increasing sterilization at the time when the operation of the fuel cell system 100 is stopped (at the time when the electric power generation is stopped). This makes it possible to suppress propagation of the germs after the operation is stopped.

However, as described above, there is a risk that germs may enter the recovered water tank 104 and the water circulating passage 72 and propagate after the operation of the fuel cell system 100 is stopped. In view of this, in the fuel cell system 110 according to Embodiment 5, the controller 110 causes the heater 103 and the water circulation unit 105 to operate when the second time has elapsed after the water circulation unit 105 was stopped, so as to execute the temperature increasing process for increasing the temperature of the recovered water in the recovered water tank 104 to a predetermined temperature or higher.

Here, the second time can be set as desired. For example, the time it may take for germs to propagate in the recovered water tank 104, the water circulating passage 72, or the like and to cause clogging, narrowing or the like of the water circulating passage 72 may be obtained in advance through an experiment or the like, and the obtained time may be set as the second time.

Thus, in the fuel cell system 100 according to Embodiment 5 configured in this way, heat sterilization can be executed on the microorganisms, such as fungi, contained in the recovered water to suppress propagation of the microorganisms, by utilizing the heat accumulated in the cooling water after the electric power generation of the fuel cell 101 stopped. In addition, by performing the heating process again after the water circulation unit 105 stopped, propagation of the microorganisms such as fungi contained in the recovered water can be suppressed.

From the foregoing description, numerous improvements and other embodiments of the present invention will be readily apparent to those skilled in the art. Accordingly, the foregoing description is to be construed only as illustrative examples and as being presented for the purpose of suggesting the best mode for carrying out the invention to those skilled in the art. Modifications may be made in specific structures and/or functions substantially without departing from the scope of the present invention. Moreover, various alterations may be made by combining a plurality of constituent elements disclosed in the foregoing embodiments appropriately.

### INDUSTRIAL APPLICABILITY

The fuel cell system and the method of operating the same according to the present invention are useful because they can more effectively suppress propagation of microorganisms than the conventional fuel cell systems, by performing heat sterilization of microorganisms when electric power is supplied to the fuel cell system in a state in which the electric power is not supplied to the fuel cell system.

### REFERENCE SIGNS LIST

- 10a: Arithmetic processing unit
- 10b: Storage unit
- 11A: Anode
- 11B: Cathode
- 71: Cooling water passage
- 72: Water circulating passage
- 73: Fuel gas supply passage
- 74: Oxidizing gas supply passage
- 75: Off-fuel-gas passage
- 76: Off-oxidizing-gas passage
- 77: Water supply passage
- 78: Water drain passage
- 80: Wire
- 81: Wire
- 82: Wire
- 83: Wire
- 100: Fuel cell system
- 101: Fuel cell
- 102: Cooling water tank
- 103: Heater
- 104: Recovered water tank
- 104A: Water discharge passage
- 104B: Water level detector
- 105: Water circulation unit
- 106: Fuel gas supplying unit
- 107: Oxidizing gas supplying unit
- 108: Fluid sending unit
- 109: Purifier
- 110: Controller
- 110a: Power supply determination unit
- 111: Power supply utility
- 112: Power supply detector
- 113: External power load
- 114: Interconnecting point
- 115: Circuit breaker
- 116: Output controller
- 117: Water drain valve
- 118: Temperature detector
- 119: Water supplying unit

## Claims

1. A fuel cell system including a fuel cell (101), the fuel cell system comprising:
a cooling water passage (71) configured to allow cooling water for cooling the fuel cell to flow therethrough;
a cooling water tank (102) provided in the cooling water passage and configured to store the cooling water;
a recovered water tank (104) configured to store water produced in the fuel cell system;
a water circulating passage (72) configured to allow water circulating between the recovered water tank and the cooling water tank to flow therethrough;
a power supply detection unit (110a) configured to detect electric power supply from a power supply utility to the fuel cell system;
a temperature detector (118), provided in at least one of the cooling water passage, the cooling water tank, the recovered water tank, and the water circulating passage, the temperature detector being configured to detect a temperature of water; and
**characterized by**
a controller (110) configured to execute a temperature increasing process for increasing the temperature detected by the temperature detector to a predetermined temperature or higher if the power supply detection unit detects a change from a state in which the electric power is not supplied to the fuel cell system to a state in which the electric power is supplied to the fuel cell system,
wherein the predetermined temperature is a temperature at which germs existing in water within at least one of the cooling water, the cooling water tank, the recovered water tank, and the water circulating passage can be killed.

2. The fuel cell system according to claim 1, further comprising a heater (103) provided in one of the cooling water passage, the cooling water tank, the recovered water tank, and the water circulating passage, wherein the controller is configured to operate the heater when executing the temperature increasing process.

3. The fuel cell system according to claim 1 or 2, further comprising:
a water circulation unit (105) provided in the water circulating passage, the water circulation unit being configured to circulate water between the recovered water tank and the cooling water tank; wherein
the controller is configured to cause the water circulation unit to circulate water in the water circulating passage when executing the temperature increasing process.

4. The fuel cell system according to any one of claims 1 to 3, wherein the controller (110) is configured to execute the temperature increasing process if the state in which the electric power is not supplied to the fuel cell system has continued for a first predetermined time or longer.

5. The fuel cell system according to any one of claims 1 to 4, wherein
the controller (110) is configured to execute the temperature increasing process at every second predetermined time;
the controller (110) is configured to execute the temperature increasing process if the power supply detection unit detects the change from the state in which the electric power is not supplied to the fuel cell system to the state in which the electric power is supplied to the fuel cell system and time that has elapsed from a previous temperature increasing process is equal to or longer than the second predetermined time; and
the controller(110) is configured not to execute the temperature increasing process if the time that has elapsed from the previous temperature increasing process is less than the second predetermined time, even when the power supply detection unit detects the change from the state in which the electric power is not supplied to the fuel cell system to the state in which the electric power is supplied to the fuel cell system

6. The fuel cell system according to any one of claims 1 to 5, further comprising:
a water level detector (104B) provided in at least one of the recovered water tank and the cooling water tank, wherein:
the controller (110) is configured to execute the temperature increasing process if the power supply detection unit detects the change from the state in which the electric power is not supplied to the fuel cell system to the state in which the electric power is supplied to the fuel cell system, and the water level detected by the water level detector is equal to or higher than a first water level; and
the controller (110) is configured not to execute the temperature increasing process if the water level detected by the water level detector is less than the first water level, even when the power supply detection unit detects the change from the state in which the electric power is not supplied to the fuel cell system to the state in which the electric power is supplied to the fuel cell system.

7. The fuel cell system according to claim 6, further comprising:
a water supplying unit (119) configured to supply water to a tank in which the water level detector is provided, wherein
the controller is configured to activate the water supplying unit if the water level detected by the water level detector is less than the first water level and to execute the temperature increasing process after the water level detected by the water level detector has become equal to or higher than the first water level.

8. The fuel cell system according to claim 6, further comprising:
a water supplying unit (119) configured to supply water to a tank in which the water level detector is provided, wherein
the controller is configured to activate the water supplying unit if the water level detected by the water level detector is less than the first water level and to execute the temperature increasing process when a third predetermined time has elapsed after the water level detected by the water level detector has become equal to or higher than the first water level.

9. The fuel cell system according to any one of claims 1 to 5, further comprising:
a storage unit (10b) configured to store whether or not water drainage of the fuel cell system has been executed, wherein
the controller is configured to execute the temperature increasing process if the water drainage has not been executed.

10. A method of operating a fuel cell system including a fuel cell (101),
the fuel cell system comprising:
a cooling water passage (71) configured to allow cooling water for cooling the fuel cell to flow therethrough;
a cooling water tank (102) provided in the cooling water passage and configured to store the cooling water;
a recovered water tank (104) configured to store water produced in the fuel cell system;
a water circulating passage (729 configured to allow water circulating between the recovered water tank and the cooling water tank to flow therethrough;
a power supply detection unit (110a) configured to detect electric power supply from a power supply utility to the fuel cell system; and
a temperature detector (118), provided in at least one of the cooling water passage, the cooling water tank, the recovered water tank, and the water circulating passage, the temperature detector being configured to detect a temperature of water, the method **characterized by** comprising:
executing a temperature increasing process for increasing the temperature detected by the temperature detector to a predetermined temperature or higher if the power supply detection unit detects a change from a state in which the electric power is not supplied to the fuel cell system a state in which the electric power is supplied to the fuel cell system
wherein the predetermined temperature is a temperature at which germs existing in water within at least one of the cooling water, the cooling water tank, the recovered water tank, and the water circulating passage can be killed.

## Patentansprüche

1. Brennstoffzellensystem, das eine Brennstoffzelle (101) enthält, wobei das Brennstoffzellensystem umfasst:
einen Kühlwasser-Kanal (71), der so eingerichtet ist, dass Kühlwasser zum Kühlen der Brennstoffzelle durch ihn hindurchfließen kann;
einen Kühlwasser-Behälter (102), der sich in dem Kühlwasser-Kanal befindet und so eingerichtet ist, dass er das Kühlwasser speichert;
einen Behälter (104) für zurückgewonnenes Wasser, der so eingerichtet ist, dass er in dem Brennstoffzellensystem erzeugtes Wasser speichert;
einen Wasserumlauf-Kanal (72), der so eingerichtet ist, dass er zulässt, dass zwischen dem Behälter für zurückgewonnenes Wasser und dem Kühlwasser-Behälter umlaufendes Wasser durch ihn hindurchfließen kann;
eine Energieversorgungs-Erfassungseinheit (110a), die so eingerichtet ist, dass sie Versorgung des Brennstoffzellensystems mit elektrischer Energie durch eine Energieversorgungseinrichtung erfasst;
einen Temperaturdetektor (118), der sich in dem Kühlwasser-Kanal, dem Kühlwasser-Behälter, dem Behälter für zurückgewonnenes Wasser oder/und dem Wasserumlauf-Kanal befindet, wobei der Temperaturdetektor so eingerichtet ist, dass er eine Temperatur von Wasser erfasst; und
**gekennzeichnet durch**
eine Steuereinrichtung (110), die so eingerichtet ist, dass sie einen TemperaturerhöhungsProzess zum Erhöhen der **durch** den Temperaturdetektor erfassten Temperatur auf eine vorgegebene Temperatur oder darüber ausführt, wenn die EnergieversorgungsErfassungseinheit eine Änderung von einem Zustand, in dem das Brennstoffzellensystem nicht mit elektrischer Energie versorgt wird, zu einem Zustand erfasst, in dem das Brennstoffzellensystem mit elektrischer Energie versorgt wird,
wobei die vorgegebene Temperatur eine Temperatur ist, bei der Keime, die in Wasser in dem Kühlwasser-Kanal, dem Kühlwasser-Behälter, dem Behälter für zurückgewonnenes Wasser oder/und dem Wasserumlauf-Kanal vorhanden sind, getötet werden können.

2. Brennstoffzellensystem nach Anspruch 1, das des Weiteren eine Heizeinrichtung (103) umfasst, die sich in dem Kühlwasser-Kanal, dem Kühlwasser-Behälter, dem Behälter für zurückgewonnenes Wasser oder dem Wasserumlauf-Kanal befindet, wobei die Steuereinrichtung so eingerichtet ist, dass sie die Heizeinrichtung betreibt, wenn sie den Temperaturerhöhungs-Prozess ausführt.

3. Brennstoffzellensystem nach Anspruch 1 oder 2, das des Weiteren umfasst:
eine Wasserumlaufeinheit (105), die sich in dem Wasserumlauf-Kanal befindet, wobei die Wasserumlauf-Einheit so eingerichtet ist, dass sie Wasser zwischen dem Behälter für zurückgewonnenes Wasser und dem Kühlwasser-Behälter umlaufen lässt, wobei
die Steuereinrichtung so eingerichtet ist, dass sie die Wasserumlauf-Einheit veranlasst, Wasser in dem Wasserumlauf-Kanal umlaufen zu lassen, wenn sie den Temperaturerhöhungs-Prozess ausführt.

4. Brennstoffzellensystem nach einem der Ansprüche 1 bis 3, wobei die Steuereinrichtung (110) so eingerichtet ist, dass sie den Temperaturerhöhungs-Prozess ausführt, wenn der Zustand, in dem das Brennstoffzellensystem nicht mit der elektrischen Energie versorgt wird, über eine erste vorgegebene Zeit oder länger angehalten hat.

5. Brennstoffzellensystem nach einem der Ansprüche 1 bis 4, wobei
die Steuereinrichtung (110) so eingerichtet ist, dass sie den TemperaturerhöhungsProzess nach jeder zweiten vorgegebenen Zeit ausführt;
die Steuereinrichtung (10) so eingerichtet ist, dass sie den Temperaturerhöhungs-Prozess ausführt, wenn die Stromversorgungs-Erfassungseinheit die Änderung von dem Zustand, in dem das Brennstoffzellensystem nicht mit der elektrischen Energie versorgt wird, zu dem Zustand erfasst, in dem das Brennstoffzellensystem mit der elektrischen Energie versorgt wird, und Zeit, die seit einem vorhergegangenen Temperaturerhöhungs-Prozess verstrichen ist, genauso lang ist wie oder länger als die zweite vorgegebene Zeit; und
die Steuereinrichtung (110) so eingerichtet ist, dass sie den TemperaturerhöhungsProzess nicht ausführt, wenn die Zeit, die seit dem vorhergegangenen Temperaturerhöhungs-Prozess verstrichen ist, kürzer ist als die zweite vorgegebene Zeit, selbst wenn die Stromversorgungs-Erfassungseinheit die Änderung von dem Zustand, in dem das Brennstoffzellensystem nicht mit der elektrischen Energie versorgt wird, zu dem Zustand erfasst, in dem das Brennstoffzellensystem mit der elektrischen Energie versorgt wird.

6. Brennstoffzellensystem nach einem der Ansprüche 1 bis 5, das des Weiteren umfasst:
einen Wasserpegel-Detektor (104B), der sich in dem Behälter für zurückgewonnenes Wasser oder/und dem Kühlwasser-Behälter befindet, wobei:
die Steuereinrichtung (110) so eingerichtet ist, dass sie den Temperaturerhöhungs-Prozess ausführt, wenn die Energieversorgungs-Erfassungseinheit die Änderung von dem Zustand, in dem das Brennstoffzellensystem nicht mit der elektrischen Energie versorgt wird, zu dem Zustand erfasst, in dem das Brennstoffzellensystem mit der elektrischen Energie versorgt wird, und der durch den Wasserpegel-Detektor erfasste Wasserpegel genauso hoch ist wie oder höher als ein erster Wasserpegel; und
die Steuereinrichtung (110) so eingerichtet ist, dass sie den Temperaturerhöhungs-Prozess nicht ausführt, wenn der durch den Wasserpegel-Detektor erfasste Wasserpegel niedriger ist als der erste Wasserpegel, selbst wenn die Energieversorgungs-Erfassungseinheit die Änderung von dem Zustand, in dem das Brennstoffzellensystem nicht mit der elektrischen Energie versorgt wird, zu dem Zustand erfasst, in dem das Brennstoffzellensystem mit der elektrischen Energie versorgt wird.

7. Brennstoffzellensystem nach Anspruch 6, das des Weiteren umfasst:
eine Wasserzuführeinheit (119), die so eingerichtet ist, dass sie einem Behälter Wasser zuführt, in dem sich der Wasserpegel-Detektor befindet, wobei die Steuereinrichtung so eingerichtet ist, dass sie die Wasserzuführeinheit aktiviert, wenn der durch den Wasserpegel-Detektor erfasste Wasserpegel niedriger ist als der erste Wasserpegel, und den Temperaturerhöhungs-Prozess ausführt, nachdem der durch den Wasserpegel-Detektor erfasste Wasserpegel genauso hoch wie oder höher geworden ist als der erste Wasserpegel.

8. Brennstoffzellensystem nach Anspruch 6, die des Weiteren umfasst:
eine Wasserzuführeinheit (119), die so eingerichtet ist, dass sie Wasser einem Behälter zuführt, in dem sich der Wasserpegel-Detektor befindet, wobei
die Steuereinrichtung so eingerichtet ist, dass sie die Wasserzuführeinheit aktiviert, wenn der durch den Wasserpegel-Detektor erfasste Wasserpegel niedriger ist als der erste Wasserpegel, und den Temperaturerhöhungs-Prozess ausführt, wenn eine dritte vorgegebene Zeit verstrichen ist, nachdem der durch den Wasserpegel-Detektor erfasste Wasserpegel genauso hoch wie oder höher geworden ist als der erste Wasserpegel.

9. Brennstoffzellensystem nach einem der Ansprüche 1 bis 5, das des Weiteren umfasst:
eine Speichereinheit (10b), die so eingerichtet ist, dass sie speichert, ob Entwässerung des Brennstoffzellensystems ausgeführt worden ist oder nicht, wobei
die Steuereinrichtung so eingerichtet ist, dass sie den Temperaturerhöhungs-Prozess ausführt, wenn die Entwässerung nicht ausgeführt worden ist.

10. Verfahren zum Betreiben eines Brennstoffzellensystems, das eine Brennstoffzelle (101) enthält, wobei das Brennstoffzellensystem umfasst:
einen Kühlwasser-Kanal (71), der so eingerichtet ist, dass Kühlwasser zum Kühlen der Brennstoffzelle durch ihn hindurchfließen kann;
einen Kühlwasser-Behälter (102), der sich in dem Kühlwasser-Kanal befindet und so eingerichtet ist, dass er das Kühlwasser speichert;
einen Behälter (104) für zurückgewonnenes Wasser, der so eingerichtet ist, dass er in dem Brennstoffzellensystem erzeugtes Wasser speichert;
einen Wasserumlauf-Kanal (72), der so eingerichtet ist, dass er zulässt, dass zwischen dem Behälter für zurückgewonnenes Wasser und dem Kühlwasser-Behälter umlaufendes Wasser durch ihn hindurchfließen kann;
eine Energieversorgungs-Erfassungseinheit (110a), die so eingerichtet ist, dass sie Versorgung des Brennstoffzellensystems mit elektrischer Energie durch eine Energieversorgungseinrichtung erfasst;
einen Temperaturdetektor (118), der sich in dem Kühlwasser-Kanal, dem Kühlwasser-Behälter, dem Behälter für zurückgewonnenes Wasser oder/und dem Wasserumlauf-Kanal befindet, wobei der Temperaturdetektor so eingerichtet ist, dass er eine Temperatur von Wasser erfasst, und das Verfahren **dadurch gekennzeichnet ist, dass** es umfasst:
Ausführen eines Temperaturerhöhungs-Prozesses zum Erhöhen der durch den Temperaturdetektor erfassten Temperatur auf eine vorgegebene Temperatur oder darüber, wenn die Energieversorgungs-Erfassungseinheit eine Änderung von einem Zustand, in dem das Brennstoffzellensystem nicht mit elektrischer Energie versorgt wird, zu einem Zustand erfasst, in dem das Brennstoffzellensystem mit elektrischer Energie versorgt wird,
wobei die vorgegebene Temperatur eine Temperatur ist, bei der Keime, die in Wasser in dem Kühlwasser-Kanal, dem Kühlwasser-Behälter, dem Behälter für zurückgewonnenes Wasser oder/und dem Wasserumlauf-Kanal vorhanden sind, getötet werden können.

## Revendications

1. Système de pile à combustible incluant une pile à combustible (101), le système de pile à combustible comprenant :
un passage d'eau de refroidissement (71) configuré pour laisser passer de l'eau de refroidissement destinée à refroidir la pile à combustible ;
un réservoir d'eau de refroidissement (102) pourvu dans le passage d'eau de refroidissement et configuré pour stocker l'eau de refroidissement ;
un réservoir d'eau récupérée (104) configuré pour stocker de l'eau produite dans le système de pile à combustible ;
un passage de circulation d'eau (72) configuré pour laisser passer de l'eau qui circule entre le réservoir d'eau récupérée et le réservoir d'eau de refroidissement ;
une unité de détection d'alimentation (110a) configurée pour détecter une alimentation d'énergie électrique provenant d'un dispositif d'alimentation du système de pile à combustible ;
un détecteur de température (118) pourvu dans au moins un élément parmi le passage d'eau de refroidissement, le réservoir d'eau de refroidissement, le réservoir d'eau récupérée et le passage de circulation d'eau, le détecteur de température étant configuré pour détecter la température de l'eau ; et
**caractérisé par**
un contrôleur (110) configuré pour exécuter un processus d'augmentation de température pour augmenter la température détectée par le détecteur de température à une température supérieure ou égale à une température prédéterminée si l'unité de détection d'alimentation détecte un changement d'un état dans lequel l'énergie électrique n'est pas alimentée au système de pile à combustible à un état dans lequel l'énergie électrique est alimentée au système de pile à combustible,
dans lequel la température prédéterminée est une température à laquelle les germes présents dans l'eau dans au moins l'eau de refroidissement, le réservoir d'eau de refroidissement, le réservoir d'eau récupérée et le passage de circulation d'eau peuvent être tués.

2. Système de pile à combustible selon la revendication 1, comprenant en outre un dispositif de chauffage (103) pourvu dans un élément parmi le passage d'eau de refroidissement, le réservoir d'eau de refroidissement, le réservoir d'eau récupérée et le passage de circulation d'eau, dans lequel le contrôleur est configuré pour commander le dispositif de chauffage lors de l'exécution du processus d'augmentation de température.

3. Système de pile à combustible selon la revendication 1 ou 2, comprenant en outre :
une unité de circulation d'eau (105) pourvue dans le passage de circulation d'eau, l'unité de circulation d'eau étant configurée pour faire circuler de l'eau entre le réservoir d'eau récupérée et le réservoir d'eau de refroidissement ; dans lequel
le contrôleur est configuré pour commander à l'unité de circulation d'eau de faire circuler de l'eau dans le passage de circulation d'eau lors de l'exécution du processus d'augmentation de température.

4. Système de pile à combustible selon l'une quelconque des revendications 1 à 3, dans lequel le contrôleur (110) est configuré pour exécuter le processus d'augmentation de température si l'état dans lequel l'énergie électrique n'est pas alimentée au système de pile à combustible a continué durant un premier temps prédéterminé ou plus.

5. Système de pile à combustible selon l'une quelconque des revendications 1 à 4, dans lequel :
le contrôleur (110) est configuré pour exécuter le processus d'augmentation de température chaque deuxième temps prédéterminé ;
le contrôleur (110) est configuré pour exécuter le processus d'augmentation de température si l'unité de détection d'alimentation détecte le changement d'un état dans lequel l'énergie électrique n'est pas alimentée au système de pile à combustible à un état dans lequel l'énergie électrique est alimentée au système de pile à combustible, et le temps écoulé depuis un processus d'augmentation de température précédent est supérieur ou égal au deuxième temps prédéterminé ; et
le contrôleur (110) est configuré pour ne pas exécuter le processus d'augmentation de température si le temps écoulé depuis le processus d'augmentation de température précédent est inférieur au deuxième temps prédéterminé, même quand l'unité de détection d'alimentation détecte le changement de l'état dans lequel l'énergie électrique n'est pas alimentée au système de pile à combustible à l'état dans lequel l'énergie électrique est alimentée au système de pile à combustible,

6. Système de pile à combustible selon l'une quelconque des revendications 1 à 5, comprenant en outre :
un détecteur de niveau d'eau (104B) pourvu dans au moins un réservoir parmi le réservoir d'eau récupérée et le réservoir d'eau de refroidissement, dans lequel :
le contrôleur (110) est configuré pour exécuter le processus d'augmentation de température si l'unité de détection d'alimentation détecte le changement de l'état dans lequel l'énergie électrique n'est pas alimentée au système de pile à combustible à l'état dans lequel l'énergie électrique est alimentée au système de pile à combustible, et le niveau d'eau détecté par le détecteur de niveau d'eau est supérieur ou égal à un premier niveau d'eau ; et
le contrôleur (110) est configuré pour ne pas exécuter le processus d'augmentation de température si le niveau d'eau détecté par le détecteur de niveau d'eau est inférieur au premier niveau d'eau, même quand l'unité de détection d'alimentation détecte le changement de l'état dans lequel l'énergie électrique n'est pas alimentée au système de pile à combustible à l'état dans lequel l'énergie électrique est alimentée au système de pile à combustible.

7. Système de pile à combustible selon la revendication 6, comprenant en outre :
une unité d'alimentation d'eau (119) configurée pour alimenter de l'eau à un réservoir dans lequel est pourvu le détecteur de niveau d'eau, dans lequel
le contrôleur est configuré pour activer l'unité d'alimentation d'eau si le niveau d'eau détecté par le détecteur de niveau d'eau est inférieur au premier niveau d'eau et pour exécuter le processus d'augmentation de température après que le niveau d'eau détecté par le détecteur de niveau d'eau est devenu supérieur ou égal au premier niveau d'eau.

8. Système de pile à combustible selon la revendication 6, comprenant en outre :
une unité d'alimentation d'eau (119) configurée pour alimenter de l'eau à un réservoir dans lequel est pourvu le détecteur de niveau d'eau, dans lequel
le contrôleur est configuré pour activer l'unité d'alimentation d'eau si le niveau d'eau détecté par le détecteur de niveau d'eau est inférieur au premier niveau d'eau et pour exécuter le processus d'augmentation de température quand un troisième temps prédéterminé s'est écoulé après que le niveau d'eau détecté par le détecteur de niveau d'eau est devenu supérieur ou égal au premier niveau d'eau.

9. Système de pile à combustible selon l'une quelconque des revendications 1 à 5, comprenant en outre :
une unité de stockage (10b) configurée pour stocker le fait qu'un drainage d'eau du système de pile à combustible a été exécuté ou non, dans lequel
le contrôleur est configuré pour exécuter le processus d'augmentation de température si le drainage d'eau n'a pas été exécuté.

10. Procédé de fonctionnement d'un système de pile à combustible incluant une pile à combustible (101),
le système de pile à combustible comprenant :
un passage d'eau de refroidissement (71) configuré pour laisser passer de l'eau de refroidissement destinée à refroidir la pile à combustible ;
un réservoir d'eau de refroidissement (102) pourvu dans le passage d'eau de refroidissement et configuré pour stocker l'eau de refroidissement ;
un réservoir d'eau récupérée (104) configuré pour stocker de l'eau produite dans le système de pile à combustible ;
un passage de circulation d'eau (72) configuré pour laisser passer de l'eau qui circule entre le réservoir d'eau récupérée et le réservoir d'eau de refroidissement ;
une unité de détection d'alimentation (110a) configurée pour détecter une alimentation d'énergie électrique provenant d'un dispositif d'alimentation du système de pile à combustible ; et
un détecteur de température (118) pourvu dans au moins un élément parmi le passage d'eau de refroidissement, le réservoir d'eau de refroidissement, le réservoir d'eau récupérée et le passage de circulation d'eau, le détecteur de température étant configuré pour détecter une température d'eau, le procédé étant **caractérisé en ce qu'**il comprend :
l'exécution d'un processus d'augmentation de température pour augmenter la température détectée par le détecteur de température à une température supérieure ou égale à une température prédéterminée si l'unité de détection d'alimentation détecte un changement d'un état dans lequel l'énergie électrique n'est pas alimentée au système de pile à combustible à un état dans lequel l'énergie électrique est alimentée au système de pile à combustible,
dans lequel la température prédéterminée est une température à laquelle les germes présents dans l'eau dans au moins l'eau de refroidissement, le réservoir d'eau de refroidissement, le réservoir d'eau récupérée et le passage de circulation d'eau peuvent être tués.
